(19) Europäisches Patentamt
European Patent Office
Office européen des brevets

(11) EP 1 976 288 B1

(12) # EUROPÄISCHE PATENTSCHRIFT

(45) Veröffentlichungstag und Bekanntmachung des Hinweises auf die Patenterteilung:
**14.07.2010 Patentblatt 2010/28**

(51) Int Cl.:
***H04N 7/01*** *(2006.01)* ***H04N 5/44*** *(2006.01)*
***G06T 3/40*** *(2006.01)*

(21) Anmeldenummer: **08004835.8**

(22) Anmeldetag: **14.03.2008**

(54) **Iteratives Verfahren zur Interpolation von Bildinformationswerten**

Iterative method for interpolating image information values

Procédé itératif destiné à l'interpolation de valeurs d'informations d'image

(84) Benannte Vertragsstaaten:
**DE FR GB IT NL**

(30) Priorität: **28.03.2007 DE 102007015002**

(43) Veröffentlichungstag der Anmeldung:
**01.10.2008 Patentblatt 2008/40**

(73) Patentinhaber: **Trident Microsystems (Far East) Ltd.**
**Grand Cayman (KY)**

(72) Erfinder: **Hahn, Marko**
**85579 Neubiberg (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**EP-A- 0 886 445** **EP-A- 1 729 258**
**WO-A-96/28931** **WO-A-02/056589**
**GB-A- 2 283 385**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 976 288 B1

## Beschreibung

Die vorliegende Erfindung betrifft ein iteratives Interpolationsverfahren nach dem Oberbegriff des Anspruchs 1.

Ein solches bewegungskompensiertes Interpolationsverfahren zur Ermittlung eines Bildinformationswertes für einen Bildbereich wird in der Bildverarbeitung für verschiedene Anwendungszweckebenötigt und ist beispielsweise aus GB 2283385 A bekannt.

Ein Anwendungszweck für ein bewegungskompensiertes Interpolationsverfahren besteht in einer Reduzierung der Fläche von Halo-Effekten in interpolierten Daten, wie etwa in WO 02056589 A1 beschrieben. Hierbei wird für eine Sequenz von Bildern je Bild ein Bewegungsvektor generiert und die Zuverlässigkeit jedes dieser Bewegungsvektoren abgeschätzt. Daraufhin werden Gewichtungsfaktoren bestimmt auf deren Basis dann die Bilder der Sequenz interpoliert werden.

Ein Anwendungszweck ist die Erzeugung von Vollbildern aus in der Fernsehtechnik übertragenen Halbbildern. Hierbei wird zwischen je zwei Zeilen eines vorliegenden Halbbildes, eine Zwischenzeile mit einer Anzahl von Bildpunkten interpoliert, um ein Vollbild zu erhalten. Ein Interpolationsverfahren zur Erzeugung solcher Zwischenzeilen ist beispielsweise in der DE 102 36 208 A1 (Hahn et al.) oder der DE 102 32 372 A1 (Hahn et. al) beschrieben.

Ein weiterer Anwendungszweck für ein Interpolationsverfahren ist die Erhöhung der Bildauflösung. Hierbei werden zwischen vorhandenen Zeilen und Spalten eines Bildes weitere Zeilen und Spalten durch Interpolation erzeugt, um die Bildauflösung zu erhöhen. Ein Verfahren hierzu ist beispielsweise in der US 6,229,570 B1 (Bugwadia et al.) beschrieben.

Interpolationsverfahren werden außerdem bei Bildübertragungsverfahren benötigt, bei dem ein zu übertragendes Bild in Bildblöcke unterteilt und blockweise übertragen wird.'Wird bedingt durch einen Übertragungsfehler ein Block nicht übertragen oder fehlerhaft übertragen, so ist dessen Bildinhalt empfängerseitig zu interpolieren. Ein Verfahren hierzu ist beispielsweise in Meisinger, Kaup: "Örtliche Fehlerverschleierung von gestört empfangenen Bilddaten durch frequenzselektive Extrapolation", Elektronische Medien: 10. Dortmunder Fernsehseminar, ITG-Fachbericht 179, Seiten 189-194 September 2003, beschrieben.

Ein weiterer Anwendungszweck für Interpolationsverfahren in der Bildverarbeitung ist die Erhöhung der Auflösung eines Bewegungsvektorfeldes. In der Bildverarbeitung ist es hinlänglich bekannt, ein Bild, das Teil einer Bildfolge mit mehreren aufeinanderfolgenden Bildern ist, in einzelne Bildblöcke zu unterteilen und jedem dieser Bildblöcke mittels eines Bewegungsschätzverfahrens einen Bewegungsvektor zuzuordnen. Diese Vektoren bilden gemeinsam ein Bewegungsvektorfeld. Ein solcher einem Block zugeordneter Bewegungsvektor enthält eine Information darüber, an welcher Position in einem vorherigen und/oder nachfolgenden Bild der Bildfolge sich der Inhalt dieses Blockes wiederfindet. Diese Information kann zur bewegungsrichtigen Erzeugung von Zwischenbildern zwischen zwei Bildern einer Bildfolge genutzt werden. Bei der Bewegungsschätzung ist es wünschenswert, möglichst kleine Blöcke, denen jeweils ein Bewegungsvektor zugeordnet ist, zu erhalten. Dies erhöht allerdings den Aufwand bei der Bewegungsschätzung.

Um diesen Aufwand für die Bewegungsschätzung in Grenzen zu halten, ist es bekannt, die Auflösung des Vektorfeldes nach der Bewegungsschätzung zu erhöhen, indem die zunächst vorhandenen Bildblöcke in kleinere Blöcke unterteilt werden, denen unter Anwendung eines Interpolationsverfahrens Bewegungsvektoren unter Berücksichtigung der Bewegungsvektoren der ursprünglichen größeren Blöcke zugeordnet werden. Ein Verfahren hierfür ist beispielsweise in der US 5,148,269 (de Haan et al.) beschrieben.

Ein weiterer Anwendungszweck für Interpolationsverfahren ist die Erzeugung von Zwischenbildern, die zeitlich zwischen vorhandenen Bildern einer Bildfolge angeordnet sind.

Eine iterative Bestimmung von Paramtern im Rahmen einer Auswahl von Bewegungsvektoren ist in EP 0 886 445 A3 gezeigt. Dabei werden Bewegungsvektoren iterativ verbessert, indem benachtbarte Bewegungsvektoren in einer Vorhersageprozess eingebunden werden.

Ziel der vorliegenden Erfindung ist es, ein verbessertes bewegungsvektorgestütztes Verfahren zur Berechnung weitgehend optimal interpolierter Bilder anzugeben.

Dieses Ziel wird durch ein iteratives Interpolationsverfahren nach Anspruch 1 erreicht. Vorteilhafte Ausgestaltungen sind Gegenstand der Unteransprüche.

Das erfindungsgemäße Verfahren wird auf eine Bildfolge mit einer Anzahl von Bildern angewendet, die in eine Anzahl Bildbereiche unterteilt ist, von denen einigen Bildbereichen bereits jeweils ein Bildinformationswert zugeordnet ist. Bildbereiche, denen bereits ein Bildinformationswert zugeordnet ist, zu denen also kein Bildinformationswert interpoliert werden muss, werden nachfolgend als "Originalbildbereiche" bezeichnet.

Wenigstens eines der Bilder der Bildfolge umfasst außerdem wenigstens einen zu interpolierenden Bildbereich, zu dem ein Bildinformationswert zu interpolieren ist. Dieser Bildinformationswert wird nachfolgend als "interpolierter Bildinformationswert" bezeichnet.

Jeder Bildbereich umfasst wenigstens einen Bildpunkt, kann also aus einem einzigen Bildpunkt oder auch aus mehreren matrixartig angeordneten Bildpunkten bestehen. Ein Bildbereich mit mehreren Bildpunkten wird nachfolgend als "Bildblock" bezeichnet.

Ein Bildinformationswert kann im Zusammenhang mit der vorliegenden Erfindung ein Luminanzwert (Helligkeitswert), ein Chrominanzwert (Farbwert) oder auch ein Bewegungsvektorwert sein, wobei letzterer zwei Bewegungsvektorkomponenten umfassen kann.

Das erfindungsgemäße iterative Verfahren umfasst zur Ermittlung eines interpolierten Bildinformationswertes in einem Bild, das eine Anzahl matrixartig angeordneter Bildbereiche aufweist, von denen wenigstens einer ein zu interpolierender Bildbereich ist, und das zeitlich zwischen einem ersten und einem Zweiten Bild einer Bildfolge angeordnet ist, die Verfahrensschritte:

a) Vorgeben eines Start-Bewegungsvektors,

b) Ermitteln eines Gütemaßes für den Start-Bewegungsvektor, das abhängig ist von Bildinformationswerten wenigstens einer Gruppe von Bildbereichen, wobei diese Gruppe von Bildbereichen wenigstens einen Bildbereich in dem ersten Bild, wenigstens einen Bildbereich in dem zweiten Bild und wenigstens einen Bildbereich in dem zu interpolierenden Bild umfasst, wobei die Position dieser Bildbereiche in den Bildern durch den Start-Bewegungsvektor vorgegeben ist,

c) Auswählen wenigstens eines von dem Start-Bewegungsvektor verschiedenen Bewegungsvektors und Ermitteln eines Gütemaßes für diesen wenigstens einen Bewegungsvektor, das abhängig ist von Bildinformationswerten wenigstens einer Gruppe von Bildbereichen, wobei diese Gruppe von Bildbereichen wenigstens einen Bildbereich in dem ersten Bild, wenigstens einen Bildbereich in dem zweiten Bild und wenigstens einen Bildbereich in dem zu interpolierenden Bild umfasst, wobei die Position dieser Bildbereiche in den Bildern durch diesen Bewegungsvektor vorgegeben ist

d) Vergleichen der Gütemaße für den Start-Bewegungsvektor und den wenigstens einen von dem Start-Bewegungsvektor verschiedenen Bewegungsvektor, Auswählen des Start-Bewegungsvektors oder des wenigstens einen anderen Bewegungsvektor abhängig von dem Vergleichsergebnis und Ermitteln eines interpolierten Bildinformationswertes unter Verwendung von Bildbereichen, die in dem ersten und zweiten Bild an Positionen liegen, die durch den ausgewählten Bewegungsvektor vorgegeben sind oder die durch einen durch Filtern des ausgewählten Bewegungsvektors erhaltenen Bewegungsvektor vorgegeben sind,,

e) Wiederholen der Verfahrensschritte c) und d) wenigstens einmal, wobei bei wiederholtem Durchführen des Verfahrensschrittes c) der im jeweils vorangegangenen Verfahrensschritt d) ausgewählte Bewegungsvektor und das Gütemaß dieses ausgewählten Bewegungsvektors als Start-Bewegungsvektor und als Gütemaß des Start-Bewegungsvektors verwendet werden.

Im Zusammenhang mit der vorliegenden Anmeldung wird als "Interpolationsrichtung" eine innerhalb eines Bildes liegende Bildrichtung bezeichnet, in der die Bildbereiche benachbart zueinander angeordnet sind, deren Bildinformationswerte zur Ermittlung des interpolierten Bildinformationswertes herangezogen werden. "Bewegungsvektor" bezeichnet eine bildübergreifende Interpolationsrichtung, wobei zur Interpolation Bildinformationen solcher Bildbereiche verwendet werden, die in verschiedenen Bildern auf dem Bewegungsvektor liegen.

Das Gütemaß für eine Bildrichtung bzw. einen Bewegungsvektor, das anhand wenigstens einer Gruppe von Bildbereichen ermittelt wird, die in dieser Bildrichtung benachbart angeordnet sind bzw. die an durch den Bewegungsvektor vorgegebenen Positionen angeordnet sind, wird derart ermittelt, dass es eine Information darüber enthält, wie stark die Bildinformationswerte dieser Gruppe voneinander abweichen. Eine Richtung/ein Vektor gilt hierbei als um so besser bzw. die "Güte" dieser Richtung/dieses Vektors gilt als um so höher, je weniger die in dieser Richtung benachbart angeordneten Bildinformationswerte bzw. die durch den Vektor vorgegebenen Bildinformationswerte voneinander abweichen. Das Gütemaß kann dabei so erzeugt werden, dass es mit steigender Güte einer Bildrichtung zunimmt oder mit steigender Güte einer Bildrichtung abnimmt.

Bei dem Vergleich der Gütemaße in Verfahrensschritt d) wird die Richtung bzw. der Vektor als Interpolationsrichtung ausgewählt, für welche der Vergleich der Gütemaße die höchste Güte ergibt.

Eine Möglichkeit zur Ermittlung eines Gütemaßes für eine Bildrichtung/einen Vektor unter Verwendung wenigstens einer Gruppe von Bildbereichen besteht darin, die Bildinformationswerte dieser Bildbereiche einer Hochpassfilterung zu unterziehen, um einen Hochpassfilterwert zu erhalten. Der Betrag dieses Hochpassfilterwertes oder eine Potenz dieses Hochpassfilterwertes mit einem Exponenten, der ein Vielfaches von zwei ist, bildet dabei das Gütemaß. Bei einer solchen Ermittlung des Gütemaßes ist dessen Wert um so kleiner ist, je weniger die Bildinformationswerte der Bildbereiche der betrachteten Gruppe voneinander abweichen.

Ein unter Verwendung nur einer Gruppe von Bildbereichen ermitteltes Gütemaß wird nachfolgend als "Einzelgütemaß" bezeichnet. Vorzugsweise werden für die Ermittlung des Gütemaßes für eine Bildrichtung/einen Vektor mehrere Einzelgütemaße ermittelt, es werden also mehrere Gruppen mit Bildbereichen, untersucht. Die "Einzelgütemaße" werden hierbei beispielsweise addiert, um das Gütemaß für die Bildrichtung/den Vektor zu erhalten.

Vor der Addition der Einzelgütemaße besteht die Möglichkeit, diese Einzelgütemaße zu gewichten und zwar abhängig davon, wie weit die einzelnen Gruppen von dem zu interpolierenden Bildbereich in dem Bild entfernt sind. Die Einzelgütemaße von näher zu dem zu interpolierenden Bildbereich angeordneten Gruppen werden dabei stärker gewichtet als weiter entfernt angeordnete.

Bei dem erfindungsgemäßen iterativen Verfahren werden in jedem Iterationsschritt die Güten von wenigstens zwei Bildrichtungen/Bewegungsvektoren verglichen, nämlich die Güte der Bildrichtung/des Vektors, die die Start-Interpolationsrichtung/den Startvektor bildet und die Güte wenigstens einer weiteren, von der Start-Interpolationsrichtung verschiedenen Bildrichtung bzw. eines weiteren von dem Startvektor verschiedenen Vektor, und am Ende jedes Iterationsschrittes wird ein interpolierter Bildinformationswert zur Verfügung gestellt. Dieser interpolierte Bildinformationswert stellt den abschließenden Bildinformationswert dar, der dem zu interpolierenden Bildbereich zugewiesen wird.

Die Verfahrensschritte c) und d) werden vorzugsweise so lange wiederholt, bis eine vorgegebene Endbedingung erreicht ist. Bei einer Ausführungsform ist vorgesehen, dass die Endbedingung dann erreicht ist, wenn eine vorgegebene Anzahl Iterationsschritte durchgeführt wurde. Bei einer anderen Ausführungsform ist vorgesehen, dass die Endbedingung dann erreicht ist, wenn das Gütemaß der Bildrichtung, die als Interpolationsrichtung ausgewählt wird, ein vorgegebenes Gütekriterium erfüllt, wenn der Gütewert also - je nach Art der Ermittlung des Gütewertes - oberhalb oder unterhalb eines vorgegebenen Schwellenwertes liegt.

Es besteht auch die Möglichkeit, die zuvor erläuterten Endbedingungen zu kombinieren, indem ein Vorliegen der Endbedingung dann angenommen wird, wenn eine der zuvor erläuterten Endbedingungen erreicht ist.

Bei dem Verfahren kann mit jedem Iterationsschritt eine neue Bildrichtung/ein neuer Vektor durch Ermittlung des Gütemaßes untersucht werden, wobei die bisher beste Bildrichtung bzw. der bisher beste Vektor, also die Bildrichtung mit dem besten Gütemaß, als Start-Interpolationsrichtung während eines weiteren Interpolationsschrittes verwendet wird.

Die Gruppen von Bildbereichen, die für die Ermittlung des Gütemaßes für eine Bildrichtung bzw. einen Bewegungsvektor herangezogen werden, können so gewählt sein, dass sie den zu interpolierenden Bildbereich enthalten. Als Bildinformationswert des zu interpolierenden Bildbereiches wird hierbei der interpolierte Bildinformationswert aus dem jeweils vorangehenden Iterationsschritt verwendet. Zu Beginn des Verfahrens, wenn noch kein Iterationsschritt vollständig durchlaufen wurde, wird in diesem Fall ein Start-Interpolationswert erzeugt. Hierzu werden Bildinformationswerte solcher Bildbereiche verwendet, die in der Start-Interpolationsrichtung benachbart zueinander und benachbart zu dem zu interpolierenden Bildbereich angeordnet sind bzw. die an durch den Start-Bewegungsvektor vorgegebenen Positionen angeordnet sind. Dieser Start-Interpolationswert kann dann bei der Ermittlung des Gütemaßes für die Start-Interpolationsrichtung oder die wenigstens eine weitere Bildrichtung herangezogen werden.

Die wenigstens eine Gruppe von Bildbereichen, die zur Ermittlung des Gütemaßes für eine Bildrichtung/einen Bewegungsvektor untersucht wird, kann wenigstens einen weiteren zu interpolierenden Bildbereiche umfassen. Das erfindungsgemäße Verfahren wird in diesem Fall derart parallel für den zu interpolierenden Bildbereich und diesen wenigstens einen weiteren zu interpolierenden Bildbereich durchgeführt, dass für den wenigstens einen weiteren zu interpolierenden Bildbereich ein Interpolationswert ermittelt wird, noch bevor die Gütemaße für die Start-Interpolationsrichtung/den Start-Bewegungsvektor und die wenigstens eine weitere Bildrichtung bei der Ermittlung des interpolierten Bildinformationswertes für den einen zu interpolierenden Bildbereich ermittelt werden.

Das erfindungsgemäße Verfahren ist vielseitig in der Bildverarbeitung einsetzbar. So besteht die Möglichkeit, dieses Verfahren bei der eingangs bereits erläuterten Zwischenzeileninterpolation einzusetzen. Das Bild umfasst hierbei eine Anzahl von Originalzeilen, die jeweils eine Anzahl Bildpunkte umfassen, denen jeweils ein Bildinformationswert zugeordnet ist. Zwischen zwei Originalzeilen ist hierbei jeweils wenigstens eine Zwischenzeile zu interpolieren, die eine Anzahl zu interpolierender Bildpunkte umfasst. Die einzelnen Bildpunkte bilden hierbei jeweils einen Bildbereich für die Durchführung des erfindungsgemäßen Verfahrens, und das Verfahren wird auf jeden Bildpunkt einer zu interpolierender Zwischenzeile angewendet.

Das erfindungsgemäße Verfahren ist auch für die Interpolation von Bildblöcken geeignet, die bei der Übertragung von Bilddaten nicht oder fehlerhaft übertragen wurden. Sofern ein solcher zu interpolierender Bildblock mehrere matrixartig angeordnete Bildpunkte umfasst, wird das erfindungsgemäße Verfahren vorzugsweise mehrmals aufeinanderfolgend durchgeführt, wobei mit jeder Durchführung des Verfahrens die Größe der zu interpolierenden Bildbereiche verkleinert wird.

Vorzugsweise wird der zu interpolierende Bildblock zunächst als ein zu interpolierender Bildbereich angenommen, und diesem Bildbereich wird mittels des erfindungsgemäßen Verfahrens ein gemeinsamer Bildinformationswert, d. h. ein gemeinsamer Helligkeitswert oder Chrominanzwert zugeordnet. Die Auflösung der korrekt übertragenen Bildblöcke des Bildes wird hierfür zunächst vergröbert, d. h. in der Umgebung des zu interpolierenden Bildblocks werden einzelne Bildpunkte zu Bildblöcken mit der gleichen Größe wie der zu interpolierende Bildblock zusammengefasst, und jedem dieser Bildblöcke wird ein Bildinformationswert zugewiesen, beispielsweise durch Tiefpassfilterung der Bildinformationswerte der einzelnen Bildpunkte des jeweiligen Bildblocks. Die so entstandenen Bildblöcke bilden Originalbildbereiche für die Durchführung des erfindungsgemäßen Verfahrens.

In einem nächsten Schritt wird die Auflösung des zu interpolierenden Bildblockes verkleinert, indem der Bildblock in mehrere kleinere Bildblöcke unterteilt wird, die zu interpolierenden Bildbereichen für das erfindungsgemäße Verfahren entsprechen. In entsprechender Weise wird die Auflösung der korrekt übertragenen, den zu interpolierenden Bildblock umgebenen Bildblöcke vergrößert und das erfindungsgemäße Verfahren wird erneut für die "kleineren" zu interpolierenden Bildbereiche des insgesamt zu interpolierenden Bildblockes durchgeführt.

Das erfindungsgemäße Verfahren wird hierbei so oft wiederholt, bis für den zu interpolierenden Bildblock dieselbe Auflösung wie für dessen Umgebung erreicht ist.

Das erfindungsgemäße Verfahren wird nachfolgend anhand von Figuren näher erläutert.

Figur 1 veranschaulicht ein Interpolationsverfahren anhand eines Beispiels zur Zwischenzeileninterpolation.

Figur 2 veranschaulicht ein Ablaufdiagramm für das Verfahren.

Figur 3 veranschaulicht ein Interpolationsverfahren anhand eines Beispiels zur Zwischenzeileninterpolation, wobei mehr als eine Zwischenzeile zu interpolieren ist.

Figur 4 veranschaulicht ein Interpolationsverfahren anhand eines Beispiels zur Erhöhung der Auflösung eines Bewegungsvektorfeldes.

Figur 5 veranschaulicht ein Interpolationsverfahren anhand eines Beispiels zur Interpolation eines nicht oder nicht korrekt übertragenen, mehrere Bildpunkte umfassenden Bildblockes während erster Verfahrensschritte.

Figur 6 veranschaulicht weitere Verfahrensschritte für die Interpolation eines mehrere Bildpunkte umfassenden Bildblocks für ein erstes Verfahren.

Figur 7 veranschaulicht weitere Verfahrensschritte für die Interpolation eines mehrere Bildpunkte umfassenden Bildblocks für ein zweites Verfahren.

Figur 8 veranschaulicht ein weiteres Ausführungsbeispiel eines Interpolationsverfahrens.

Figur 9 veranschaulicht ein Ausführungsbeispiel eines Verfahrens, bei dem eine Interpolationsrichtung eines Bildbereiches durch Anwendung einer Filterung unter Berücksichtigung von Interpolationsrichtungen der zu dem Bildbereich örtlich benachbarten Bildbereiche erhalten wird.

Figur 10 zeigt beispielhaft die bei der Filterung des Verfahrens nach Figur 9 berücksichtigten benachbarten Bildbereiche.

Figur 11 veranschaulicht ein Ausführungsbeispiel eines Verfahrens, bei dem eine Interpolationsrichtung eines Bildbereiches durch Anwendung einer Filterung unter Berücksichtigung von Interpolationsrichtungen der zu dem Bildbereich zeitlich benachbarten Bildbereiche erhalten wird.

Figur 12 veranschaulicht eine Interpolation in einer zeitlichen und einer räumlichen Interpolationsrichtung unter Verwendung eines Bewegungsvektors.

Figur 13 veranschaulicht den Verfahrensablauf eines iterativen Interpolationsverfahrens unter Verwendung von Bewegungsvektoren.

Figur 14 zeigt ein Beispiel für Gruppen von Bildpunkten, die zur Ermittlung eines Gütemaßes für einen Bewegungsvektor verwendet werden.

Figur 15 veranschaulicht die Position der in Figur 14 dargestellten Bildpunktgruppen in einem Bild.

Figur 16 zeigt ein weiteres Beispiel für Bildpunktgruppen, die zur Ermittlung eines Gütemaßes für einen Bewegungsvektor verwendet werden.

Figur 17 veranschaulicht eine Bewegungsvektor gestützte Zwischenzeileninterpolation.

Figur 18 veranschaulicht allgemein ein Interpolationsverfahren, bei dem räumlich oder zeitlich und räumlich interpoliert wird.

In den Figuren bezeichnen, sofern nicht anders angegeben, gleiche Bezugszeichen gleiche Bildbereiche und Bildsignale mit gleicher Bedeutung.

Das erfindungsgemäße Verfahren wird nachfolgend anhand eines Beispiels zur Interpolation einer Zwischenzeile zwischen zwei Originalzeilen eines Bildes erläutert.

Figur 1a zeigt schematisch einen Ausschnitt eines solchen Bildes, das Originalbildzeilen 1, 3, 5, 7 aufweist, die jeweils in eine Anzahl Bildpunkte 11 unterteilt sind. Diese Bildzeilen 1, 3, 5, 7 sind beispielsweise Bildzeilen eines aus der Fernsehübertragung bekannten Halbbildes. Zur Erhöhung der Bildauflösung bzw. zur Verbesserung der Bilddarstellung ist es wünschenswert, zwischen zwei Originalzeilen 1, 3, 5, 7 jeweils eine weitere Bildzeile 2, 4, 6, die nachfolgend als Zwischenzeile bezeichnet wird und die jeweils eine Anzahl Bildpunkte umfasst, zu interpolieren. Die Bildpunkte der Originalbildzeilen 1, 3, 5, 7 sind in Figur 1a als Quadrate mit durchgezogenen Linien dargestellt, während die Bildpunkte der Zwischenzeilen 2, 4, 6 als Quadrate mit teilweise gestrichelten Linien dargestellt sind.

Die Originalbildzeilen 1, 3, 5, 7 mit den Originalbildpunkten sowie die zu interpolierenden Zwischenzeilen 2, 4, 6 mit den zu interpolierenden Bildpunkten sind Teil eines Bildes, in dem die Originalbildpunkte und die zu interpolierenden Bildpunkte matrixartig angeordnet sind. Die Originalbildzeilen und die Zwischenzeilen 1-7 sind in dem Beispiel in vertikaler Richtung übereinanderliegend angeordnet. Eine erste Richtung der Bildpünktmatrix, die der horizontalen Richtung entspricht, wird nachfolgend als x-Richtung bezeichnet, während eine zweite Richtung, die vertikal zu der ersten Richtung verläuft, nachfolgend als y-Richtung bezeichnet wird.

Jeder der Bildpunkte dieser Bildpunktmatrix bildet einen Bildbereich im Sinn der vorliegenden Erfindung, dem bereits ein Bildinformationswert zugewiesen ist, wenn es sich um einen Originalbildpunkt handelt, oder dem durch Interpolation ein Bildinformationswert zuzuweisen ist. Dieser Bildinformationswert kann ein Luminanzwert oder ein Chrominanzwert sein.

In dem in Figur 1a ausschnittsweise dargestellten Bild, das matrixartig angeordnete Bildbereiche, im vorliegenden Fall Bildpunkte, umfasst, lassen sich Bildrichtungen definieren. Für die Beschreibung einer solchen Bildrichtung wird im Weiteren folgende Schreibweise verwendet:

$$r = (dx, dy) \qquad (1).$$

r bezeichnet dabei die Bildrichtung bzw. einen Direktor, dx und dy bezeichnen die Komponenten dieser Bildrichtung bzw. des Direktors in x-Richtung und y-Richtung. Für dx und dy werden nachfolgend jeweils die kleinsten ganzzahligen Zahlenwerte verwendet, die zur Beschreibung der jeweiligen Bildrichtung verwendet werden können. Die Bildrichtung r = (0,1) beschreibt beispielsweise die vertikale Richtung, während r = (1,0) die horizontale Richtung beschreibt.

Im Weiteren sei nun ein Bildpunkt 45 der Zwischenzeile 4 betrachtet, für den die Ermittlung eines interpolierten Bildinformationswertes nachfolgend erläutert wird. Dieser Bildpunkt 45 befindet sich in der in Figur 1a dargestellten Bildpunktmatrix an einer Position (a,b). Allgemein wird mit S(.,.) nachfolgend der Bildinformationswert eines Bildpunktes an der Position (.,.) bezeichnet, und zwar sowohl der Bildinformationswert eines Originalbildpunktes als auch der Bildinformationswert eines zu interpolierenden Bildpunktes.

Zu Beginn des erfindungsgemäßen Verfahrens wird eine Start-Interpolationsrichtung definiert und ein Gütemaß für diese Start-Interpolationsrichtung wird ermittelt. Dies wird nachfolgend anhand von Figur 1b erläutert wird.

Als Start-Interpolationsrichtung ist in diesem Beispiel die vertikale Bildrichtung r = (0,1) gewählt, wobei jede beliebige weitere Bildrichtung ebenfalls als Start-Interpolationsrichtung gewählt werden kann. Unter Berücksichtigung der Tatsache, dass im vorliegenden Fall die Bildinformationswerte zu Bildpunkten zu interpolieren sind, die in vertikaler Richtung zwischen Bildpunkten liegen, zu denen Bildinformationen vorliegen, ist die horizontal Richtung r=(1,0) als Start-Interpolationsrichtung allerdings weniger geeignet.

Zur Ermittlung eines Gütemaßes für diese Start-Interpolationsrichtung wird wenigstens eine Gruppe von Bildbereichen ausgewählt, die in dieser Richtung benachbart zueinander angeordnet sind und die darüber hinaus im Bereich des zu interpolierenden Bildbereiches 45 angeordnet sind. In dem Beispiel gemäß Figur 1b sind sechs solche Gruppen von Bildbereichen ausgewählt. Diese Gruppen sind in Figur 1b durch geschlossene Kurven veranschaulicht, die mit durchgezogenen Linien gezeichnet sind. Die einzelnen Bildpunkte, die in einer jeweiligen Gruppe enthalten sind, sind durch Punkte symbolisiert. Jede dieser Gruppen umfasst in dem Beispiel drei Bildpunkte, die in der Start-Interpolationsrichtung benachbart, in dem Beispiel unmittelbar benachbart zueinander angeordnet sind.

Die einzelnen Gruppen umfassen in dem Beispiel gemäß Figur 1b jeweils einen Originalbildpunkt und jeweils zwei zu interpolierende Bildpunkte. Die Originalbildpunkte sind dabei die Bildpunkte 34, 35, 36 und 54, 55, 56 die in den Zeilen 3 und 5 oberhalb und unterhalb der zu interpolierenden Zwischenzeile 4 angeordnet sind und von denen die Bildpunkte 35, 55 dieselbe Position in x-Richtung wie der zu interpolierende Bildpunkt 45 besitzen. Die weiteren Bildpunkte 34, 36 bzw. 54, 56 liegen in x-Richtung jeweils um einen Bildpunkt versetzt zu der Position des zu interpolierenden Bildpunktes 45.

Die zwei weiteren Bildpunkte einer solchen Gruppe sind jeweils in der Start-Interpolationsrichtung unmittelbar benachbart zu einem Originalbildpunkt 34-36 bzw. 54-56 angeordnet, wobei sich einer der zwei Bildpunkte in einer der Start-Interpolationsrichtung entsprechenden Richtung und der andere der beiden Bildpunkte in einer Richtung entgegen der Start-Interpolationsrichtung an den jeweiligen Originalbildpunkt 34-36 bzw. 54-56 anschließt.

Für jede dieser Gruppen wird nachfolgend ein Einzelgütemaß ermittelt, welches angibt, wie stark die Bildinformationswerte der in der Start-Interpolationsrichtung benachbart zueinander angeordneten Bildpunkte einer Gruppe voneinander abweichen. Die Summe dieser Einzelgütemaße wird dann als Gütemaß für die Start- Interpolationsrichtung im Bereich des zu interpolierenden Bildpunktes 45 verwendet.

Bei dem in Figur 1b dargestellten Beispiel sind die zur Ermittelung des Gütemaßes für die Start-Interpolationsrichtung herangezogenen Gruppen von Bildbereichen so gewählt, dass zwei von ihnen den zu interpolierenden Bildpunkt 45 enthalten und dass die Gruppen weitere zu interpolierende Bildpunkte der Zwischenzeilen 2, 4 und 6 enthalten, nämlich die Bildpunkte 24-26, 44, 46, 64-66. Vor Ermittlung des Gütemaßes für die Start-Interpolationsrichtung sind sowohl dem zu interpolierenden Bildbereich 45 als auch den weiteren zu interpolierenden Bildbereichen Start-Interpolationswerte zuzuordnen. Dies erfolgt dadurch, dass aus den Bildinformationswerten von Originalbildpunkten, die in der Start-Interpolationsrichtung benachbart zu dem jeweils zu interpolierenden Bildpunkt angeordnet sind, ein Interpolationswert erzeugt wird. Diese Interpolation kann beispielsweise unter Anwendung einer Tiefpassfilterung erfolgen. So kann der Start-Interpolationswert S45 = S(a, b) für den zu interpolierenden Bildpunkt 45 aus einer Tiefpassfilterung der in der Start-Interpolationsrichtung unmittelbar benachbarten Bildpunkte 35, 55 erzeugt werden, so dass gilt:

$$S45 = S(a, b) = TP[S(a, b+1); S(a, b-1)] \qquad (2).$$

Mit TP [.] ist dabei eine Tiefpassfilterung der in den eckigen Klammern angegebenen Bildinformationswerte zu verstehen, die im einfachsten Fall eine Mittelwertbildung sein kann.

Auf entsprechende Weise werden Start-Interpolationswerte für die übrigen zu interpolierenden Bildinformationswerte 24-26, 44, 46, 64-66 ermittelt, die in den Gruppen von Bildbereichen enthalten sind.

Es sei in diesem Zusammenhang nochmals darauf hingewiesen, dass die Erzeugung dieser Start-Interpolationswerte für den zu interpolierenden Bildpunkt 45 und für weitere zu interpolierende Bildpunkte nur dann erforderlich ist, wenn die einzelnen Gruppen, die bei der Erzeugung eines Gütemaßes für die Start-Interpolationsrichtung untersucht werden sollen, den zu interpolierenden Bildbereich 45 und gegebenenfalls weitere zu interpolierende Bildbereiche umfassen.

Die Ermittlung der Einzelgütemaße umfasst beispielsweise eine Hochpassfilterung. Beispielhaft sei nachfolgend die Gruppe mit den Bildpunkten 25, 35, 45 betrachtet, die den zu interpolierenden Bildpunkt 45 enthält. Für das Einzelgütemaß in der Start-Interpolationsrichtung gilt für diese Gruppe:

$$M'(0,1) = HP[S25, S35, S45] \qquad (3).$$

M'(0,1) bezeichnet dabei ein Einzel-Gütemaß für die betrachtete Bildrichtung (0,1), HP[.] bezeichnet eine Hochpassfilterung für die in den eckigen Klammern angegebenen Bildinformationswerte. Die Filterkoeffizienten dieses Filters lauten beispielsweise: -0,25, 0,5, -0,25, so dass beispielsweise gilt:

$$M'(0,1) = -0,25 \cdot S25 + 0,5 \cdot S35 - 0,25 \cdot S45 \qquad (4).$$

Der Wert dieses Einzelgütemaßes ist dabei umso geringer, je weniger die Bildinformationswerte der in der Start-Interpolationsrichtung benachbart zueinander angeordneten Bildpunkte voneinander abweichen. Für das zuvor erläuterte Zahlenbeispiel ist das Einzelgütemaß gleich Null, wenn die Bildinformationswerte einer betrachteten Gruppe von Bildbereichen jeweils gleich groß sind.

Das Gütemaß für die Start-Interpolationsrichtung wird ermittelt, indem die Beträge der Einzelgütemaße der einzelnen Gruppen aufaddiert werden. Es gilt also:

$$M(0,1) = \sum|M'(0,1)| \qquad (5a).$$

Das Σ steht hierbei für die Summe der Einzelgütemaße aller betrachteten Gruppen.

Anstelle der Beträge können auch die Quadrate oder beliebige weitere geradzahlige Potenzen der Einzelgütemaße dieser einzelnen Gruppen aufaddiert werden, so dass gilt:

$$M(0,1) = \sum(M'(0,1))^{2p} \qquad (5b).$$

p steht hierbei für eine beliebige ganze Zahl ungleich Null.

Bei Anwendung einer Hochpassfilterung für die Ermittlung des Gütemaßes gilt, dass der Wert des Gütemaßes umso kleiner ist, je weniger die Bildinformationswerte der in der betrachteten Start-Interpolationsrichtung benachbart zueinander angeordneten Bildbereiche voneinander abweichen.

Die Anzahl der Bildbereiche einer zur Ermittlung des Gütemaßes untersuchten Gruppe ist selbstverständlich nicht auf lediglich drei Bildbereiche beschränkt. Selbstverständlich können auch mehr als drei Bildbereiche, die in der Start-Interpolationsrichtung benachbart zueinander angeordnet sind, untersucht, d. h. einer Hochpassfilterung unterzogen werden.

Das erfindungsgemäße Verfahren sieht vor, ein Gütemaß für wenigstens eine weitere Bildrichtung zu ermitteln, die von der Start-Interpolationsrichtung abweicht, was nachfolgend anhand von Figur 1c erläutert wird. Im Beispiel wird angenommen, dass als weitere Bildrichtung die Richtung r = (1,1) untersucht wird. Das Gütemaß wird dabei abhängig von Bildinformationswerten wenigstens einer Gruppe von Bildbereichen ermittelt, die in dieser Bildrichtung benachbart zueinander angeordnet sind. In dem Beispiel gemäß Figur 1c sind sechs solche Gruppen von Bildbereichen gebildet, die in dem Beispiel wieder jeweils die um den zu interpolierenden Bildbereich 45 angeordneten Originalbereiche 34-36 und 54-56 umfassen. Jede dieser Gruppen umfasst in dem Beispiel neben je einem der Originalbildbereiche 34-36, 54-56 jeweils zwei weitere Bildbereiche, die in der betrachteten Bildrichtung r = (1,1) benachbart zu dem jeweiligen Originalbildbereich 34-36, 54-56 angeordnet sind. Von diesen weiteren Bildbereichen ist jeweils einer in der betrachteten Bildrichtung r = (1,1) und einer entgegen dieser Bildrichtung r = (1,1) benachbart zu dem jeweiligen Originalbildbereich angeordnet. Für die Beschreibung einer Gruppe von Bildbereichen, die jeweils in einer Bildrichtung benachbart zueinander angeordnet sind, wird nachfolgend folgende Schreibweise verwendet:

$$[(x, y); r = (dx, dy); m, n].$$

Mit (x, y) ist dabei die Koordinate eines Bildpunktes dieser Gruppe bezeichnet. r bezeichnet die betrachtete Bildrichtung. m bezeichnet die Anzahl der Bildpunkte, die ausgehend von dem Bildpunkt mit der Koordinate (x, y) in der Bildrichtung r Gruppe enthalten sind, und n bezeichnet die Anzahl der Bildbereiche, die ausgehend von dem Bildbereich mit der Koordinate (x, y) entgegen der Bildrichtung r in der Gruppe enthalten sind, so dass gilt:

$$\begin{aligned}&[(x, y); r; m, n] = \\ &[(x, y); \quad (x + i \cdot dx, y + i \cdot dy) \text{ für } i = 1 \ldots m; \\ &\qquad (x - j \cdot dx, y - j \cdot dy) \text{ für } j = 1 \ldots n] \qquad (6).\end{aligned}$$

Für [(a, b+1); r = (1,1); 1,1] erhält man beispielsweise die Gruppe von Bildbereichen mit dem Originalbildbereich 35, der die Koordinaten (a, b+1) hat, und mit den beiden in der Richtung r = (1,1) benachbart zu dem zu Originalbildbereich 35 angeordneten Bildpunkte 26, 44, die die Koordinaten (a, b+2) und (a-1, b) haben.

Es sei darauf hingewiesen, dass die Parameter m, n die die Anzahl der Bildpunkte einer Gruppe bestimmen, nahezu beliebig gewählt werden können, wobei die Anzahl der Bildbereiche einer betrachteten Gruppe mit den Parametern m, n zunimmt.

Unter Berücksichtigung der oben eingeführten Nomenklatur lässt sich das Gütemaß für eine Gruppe von Bildbereichen wie folgt darstellen:

$$M'(r) = HP[S(x, y); r; m, n] \quad (7).$$

Mit HP[.] ist hier wieder eine Hochpassfunktion bezeichnet, deren Filterparameter an die Anzahl der zu filternden Bildinformationswerte S(.) anzupassen sind.

Für das Gütemaß einer betrachteten Bildrichtung gilt dann:

$$M(r) = \sum M'(r) \quad (8).$$

Bezug nehmend auf Figur 1d wird vorzugsweise das Gütemaß für eine weitere Bildrichtung ermittelt, die bezogen auf die zu Beginn des Verfahrens festgelegte Start-Interpolationsrichtung - in dem zuvor erläuterten Beispiel r = (0,1) - symmetrisch zu der weiteren Bildrichtung r = (1,1) liegt. Figur 1d zeigt sechs Gruppen von Bildbereichen, die wiederum die Originalbildpunkte 34-36 und 54, 56 umfassen und die jeweils drei in der Bildrichtung r = (-1,1) benachbart zueinander angeordnete Bildpunkte umfassen. Die Bildrichtung r = (-1,1) liegt dabei symmetrisch zu der zuvor betrachteten Bildrichtung r = (1,1) bezogen auf die Start-Interpolationsrichtung r = (0,1).

Der für diese weitere Bildrichtung r = (-1,1) ermittelte Gütewert wird nachfolgend mit M(-1,1) bezeichnet.

In einem nächsten Verfahrensschritt ist vorgesehen, die Gütemaße der bisher betrachteten Bildrichtungen, also der Start-Interpolationsrichtung r = (0,1) sowie der beiden weiteren Bildrichtungen r = (1,1) und r = (-1,1) zu vergleichen, um die jeweils "beste Bildrichtung" zu ermitteln. Die beste Bildrichtung ist dabei die Bildrichtung, deren Gütemaß auf die geringste Abweichung benachbart zueinander angeordneter Bildpunkte hinweist. Die Bildrichtung, für die das kleinste Gütemaß ermittelt wurde, wird dann als Interpolationsrichtung ausgewählt und für den zu interpolierenden Bildbereich 45 wird ein Bildinformationswert unter Verwendung solcher Bildbereiche interpoliert, die in der Interpolationsrichtung benachbart zueinander angeordnet sind.

Mit ri wird nachfolgend die anhand des Vergleichs der Gütemaße ermittelte Interpolationsrichtung bezeichnet. Für diese Interpolationsrichtung gilt für das zuvor erläuterte Beispiel, bei dem die Richtung r=(0,1) die Start-Interpolationsrichtung und die Richtungen r=(1,1) und r=(-1,1) weitere Bildrichtungen bilden:

$$ri = [\min(M(0,1),\ M(1,1),\ M(-1,1))]^{-1} \quad (9).$$

min(.) bezeichnete dabei eine Minimumsfunktion, die das Minimum der in der runden Klammer angegebenen Werte ermittelt. Mit $[.]^{-1}$ wird eine Funktion bezeichnet, die zu einem gegebenen Gütemaß die Richtung, für welche dieses Gütemaß ermittelt wurde, zurück liefert.

Der interpolierte Bildinformationswert wird beispielsweise durch Tiefpassfilterung von Bildinformationswerten solcher Bildbereiche erzeugt, die in der Interpolationsrichtung ri benachbart zu dem zu interpolierenden Bildpunkt 45 angeordnet sind. Unter der Annahme, dass als Interpolationsrichtung ri die Richtung r = (1,1) ermittelt wurde, kann der interpolierte Bildinformationswert S45 = S(a, b) beispielsweise durch Tiefpassfilterung der in der Richtung r = (1,1) benachbart liegenden Bildpunkte 36, 64 interpoliert werden, wie dies in Figur 1e veranschaulicht ist.

Allgemein gilt für den Interpolationswert:

$$S(a, b) = TP[S(a, b);\ r = ri;\ m, n] \quad (10).$$

Vorzugsweise sind die Bildbereiche, die einer Tiefpassfilterung zur Ermittlung des interpolierten Bildinformationswertes S(a, b) herangezogen werden, auf Bildinformationswerte von Originalbildbereichen beschränkt, d. h. die Gruppe von Bildbereichen [(a, b); r = ri; m, n] wird unter der Nebenbedingung ausgewählt, dass nur Bildinformationswerte von Originalbildbereichen Elemente dieser Gruppe sind.

Nach Ermittlung des Interpolationswertes S45 wird wenigstens ein weiterer Iterationsschritt durchgeführt, bei dem das Gütemaß für wenigstens eine weitere Bildrichtung ermittelt wird. Diese weitere Bildrichtung ist vorzugsweise so gewählt, dass der Winkel zwischen dieser weiteren Bildrichtung und der zu Beginn des Verfahrens vorgegebenen Start-Interpolationsrichtung r = (0,1) größer ist als der Winkel zwischen dieser Start-Interpolationsrichtung und der im vorangegangenen Iterationsschritt untersuchten Bildrichtung r = (1,1).

Bezug nehmend auf Figur 1f wird als weitere Bildrichtung beispielsweise die Bildrichtung r = (2,1) untersucht. Figur 1f zeigt sechs Gruppen von Bildpunkten, die jeweils wieder die Originalbildpunkte 34-36 und 54-56 umfassen.

Jede Gruppe umfasst neben einem dieser Originalbildpunkte zwei weitere Bildpunkte, die in der betrachteten Bildrichtung benachbart zu dem jeweiligen Originalbildpunkt liegen. Der zu interpolierende Bildpunkt 45 ist in diesem Beispiel Bestandteil einer der zur Ermittlung des Gütemaßes für die Richtung r = (2,1) untersuchten Gruppen von Bildbereichen. Diese Gruppen von Bildbereichen umfassen außerdem weitere zu interpolierende Bildbereiche, so dass vor Ermittlung des Gütemaßes für diese Richtung r =(2,1) diesen zu interpolierenden Bildbereichen Interpolationswerte zuzuordnen sind. Dies erfolgt dadurch, dass für jeden dieser Bildbereiche die zuvor für den Bildbereich 45 erläuterten Verfahrensschritte durchgeführt werden, d. h. in der Umgebung jedes dieser weiteren zu interpolierenden Bildbereiche wird das Gütemaß für die Start-Interpolationsrichtung und wenigstens eine weitere Bildrichtung ermittelt, und unter Verwendung von Bildinformationswerten solcher Bildbereiche, die in der "besten Bildrichtung" benachbart zueinander angeordnet sind, wird ein Bildinformationswert für den jeweiligen Bildbereich interpoliert.

Anhand der in Figur 1f dargestellten Gruppen wird ein Gütemaß M(2,1) für die Bildrichtung r = (2,1) ermittelt. Bezug nehmend auf Figur 1g wird unter Verwendung weiterer Gruppen von Bildbereichen ein Gütemaß für die symmetrisch zu der Richtung r = (2,1) liegende Richtung r = (-2,1) ermittelt.

Anschließend wird das Minimum dieser beiden Gütemaße M(2,1) und M(-2,1) und des Gütemaßes M(1,1) der Interpolationsrichtung aus dem vorangehenden Iterationsschritt, die für die Durchführung des aktuellen Iterationsschrittes die Start-Interpolationsrichtung bildet, ermittelt, um eine "neue" Interpolationsrichtung zu ermitteln. Sofern diese Interpolationsrichtung von der bisherigen Interpolationsrichtung abweicht, wird ein neuer Interpolationswert für den zu interpolierenden Bildbereich 45 ermittelt, wobei hierfür Bildinformationswerte von Bildbereichen herangezogen werden, die in der neuen Interpolationsrichtung benachbart zueinander angeordnet sind.

Diese zuvor erläuterten Iterationsschritte, bei denen jeweils das Gütemaß für eine bisherige beste Interpolationsrichtung mit dem Gütemaß für wenigstens eine weitere Bildrichtung verglichen wird, kann so oft wiederholt werden, bis eine Endbedingung erreicht ist. Diese Endbedingung kann beispielsweise dann erreicht sein, wenn das Gütemaß der Interpolationsrichtung einen vorgegebenen Minimalwert unterschreitet oder wenn eine vorgegebene maximale Anzahl von Iterationsschritten erreicht ist.

Sofern für die Ermittlung des Gütemaßes einer Bildrichtung die Bildinformationswerte von weiteren zu interpolierenden Zwischenbereichen benötigt werden, ist vor Durchführung eines k-ten Iterationsschrittes für den zu interpolierenden Bildbereich der Iterationsschritt k-1 für die weiteren zu interpolierenden Bildbereich durchzuführen, wobei k eine beliebige ganze Zahl größer als zwei ist. Sofern die einzelnen Iterationsschritte für mehrere Bildbereiche parallel durchgeführt werden, werden vorzugsweise in gleichen Iterationsschritten, d.h. in Iterationsschritten mit der gleichen Nummer, die gleichen Bildrichtungen untersucht. So wird beispielsweise im k-ten Iterationsschritt für alle zu interpolierenden Bildbereiche das Gütemaß für die gleiche weitere Bildrichtung mit dem Gütemaß für die Start-Interpolationsrichtung verglichen.

Die wesentlichen Verfahrensschritte des erfindurigsgemäßen Verfahrens werden nachfolgend anhand des Ablaufdiagramms in Figur 2 nochmals erläutert.

In einem ersten Verfahrensschritt 101 wird eine Bildrichtung ri als erste Interpolationsrichtung oder Start-Interpolationsrichtung vorgegeben. Optional wird in einem nächsten Verfahrensschritt 102 ein erster Interpolationswert S(a,b) für den zu interpolierenden Bildbereich durch Interpolation in dieser Start-Interpolationsrichtung ri erzeugt. Diese Interpolation ist dann erforderlich, wenn der zu interpolierende Bildbereich bei der nachfolgenden Ermittlung der Gütemaße benötigt wird.

In einem nächsten Verfahrensschritt 103 wird anhand von Bildbereichen in der Umgebung des zu interpolierenden Bildbereiches (a,b) ein Gütemaß für die Interpolationsrichtung ri ermittelt.

In einem nächsten Verfahrensschritt 104 wird wenigstens eine weitere Bildrichtung r, die sich von der Interpolationsrichtung ri unterscheidet, ausgewählt und ein Gütemaß für diese weitere Bildrichtung r wird ermittelt.

Anschließend wird in einem Verfahrensschritt 105 durch einen Vergleich der Gütemaße die "beste" Bildrichtung aus der Gruppe der Interpolationsrichtung und der wenigstens einen Bildrichtung ermittelt und die "beste" dieser Bildrichtungen wird als Interpolationsrichtung ri übernommen.

Anschließend wird in einem Verfahrensschritt 106 ein Interpolationswert für den zu interpolierenden Bildbereich erzeugt, indem die Bildinformationswerte von solchen Bildbereichen interpoliert werden, die in der Interpolationsrichtung benachbart zueinander angeordnet sind. Sofern das Bild neben dem einen zu interpolierenden Bildbereich weitere zu interpolierende Bildbereiche enthalten sollte, werden in diesem Verfahrensschritt vorzugsweise für die Interpolation nur solche Bildbereiche herangezogen, die Originalbildbereiche sind.

Anschließend wird überprüft, ob eine Endbedingung erreicht ist, die beispielsweise dann erreicht sein kann, wenn das "beste" Gütemaß einen vorgegebenen Minimalwert unterschritten hat.

Sofern die Endbedingung nicht erreicht ist, werden die Verfahrensschritte 104-106 erneut durchgeführt. Die weitere Bildrichtung r im Verfahrensschritt 104, die sich von der Interpolationsrichtung ri unterscheidet, wird betrachtet über alle Iterationsschritte vorzugsweise so gewählt, dass mit jedem Iterationsschritt stets eine neue Bildrichtung verwendet wird. Darüber hinaus ist diese im Verfahrensschritt 104 zusätzlich zu der Interpolationsrichtung ri gewählte Bildrichtung r vorzugsweise so gewählt, dass ein Winkel zwischen der im Verfahrensschritt 101 gewählten ursprünglichen Interpolationsrichtung und der weiteren betrachteten Bildrichtung r von Iterationsschritt zu Iterationsschritt größer wird.

Sofern für die Ermittlung des Gütemaßes M(ri) im Verfahrensschritt 103 die Bildinformationswerte wenigstens eines weiteren zu interpolierenden Bildbereiches benötigt werden, der sich von dem zu interpolierenden Bildbereich mit der Position (a,b) unterscheidet, wird der Verfahrensschritt 102 auf diesen wenigstens einen weiteren Bildbereich angewendet, d.h. in der Start-Interpolationsrichtung wird ein Bildinformationswert zu diesem weiteren Bildbereich interpoliert.

Entsprechend werden vor jeder erneuten Durchführung der Verfahrensschritte 104 bis 106 für den zu interpolierenden Bildbereich (a,b) diese Verfahrensschritte 104 bis 106 für jeden weiteren zu interpolierenden Bildbereich durchgeführt, der in einer Gruppe von Bildbereichen enthalten ist, die bei der Ermittlung der Gütemaße M(r), M(ri) untersucht werden.

Das erfindungsgemäße Verfahren eignet sich Bezug nehmend auf Figur 3 auch für die Interpolation von mehr als einer Zwischenzeile zwischen zwei Originalbildzeilen. Eine solche Interpolation von mehr als einer Zwischenzeile ist beispielsweise erforderlich, um ein vorgegebenes Bild zu vergrößern bzw. skalieren. Das nachfolgend für eine Interpolation mehrerer Zwischenzeilen erläuterte Verfahren wird dabei zusätzlich in einer Spaltenrichtung durchgeführt, d.h. es wird eine entsprechende Anzahl "Bildspalten" interpoliert.

Figur 3a zeigt ausschnittsweise ein Bild mit drei Originalbildzeilen 1, 3, 5, 7, zwischen denen jeweils mehr als eine, in dem Beispiel drei, Zwischenzeilen 21-23, 41-43, 61-63 zu interpolieren sind.

Zur Erläuterung sei ein Bildpunkt 415 der zu interpolierenden Zwischenzeile 41 betrachtet. Die Interpolation dieses Bildpunktes erfolgt entsprechend der anhand von Figur 1 erläuterten Interpolation des Bildpunktes 45 unter Berücksichtigung folgender weitere Aspekte:

Sowohl für die Erzeugung eines Interpolationswertes dieses Bildbereiches 415 als auch für die Ermittlung von Gütemaßen für Bildrichtungen in der Umgebung dieses zu interpolierenden Bildbereiches 415 werden nur Bildinformationswerte von Originalbildbereichen oder die Bildinformationswerte von solchen Bildbereichen herangezogen, die bezogen auf die Originalbildzeilen dieselbe relative Position besitzen wie der zu interpolierende Bildbereich 415. Ordnet man den zwischen zwei Originalbildzeilen liegenden zu interpolierenden Zwischenzeilen in jeweils gleicher Weise Rangfolgenummern zu, so dürfen bei der Interpolation des Bildbereiches 415 nur die Bildbereiche solcher Zeilen berücksichtigt werden, die dieselbe Rangfolgenummer wie die Zeile 41 des Bildbereiches 415 besitzen. Mit anderen Worten: Für die Interpolation des Bildbereiches 415, der sich entgegen der y-Richtung unmittelbar an eine Originalbildzeile anschließt, dürfen neben Originalbildbereichen nur solche Bildbereiche verwendet werden, die sich ebenfalls entgegen der y-Richtung unmittelbar an eine Originalbildzeile anschließen. Für die Interpolation eines Bildbereiches kann man sich somit vorstellen, dass das auf ein in Figur 3b dargestelltes Bild reduziert wird, das abwechselnd eine Originalbildzeile und eine Zwischenzeile aufweist, wobei die jeweiligen Zwischenzeilen die gleiche Rangfolgenummer besitzen.

Auf dieses in Figur 3b dargestellte, reduzierte Bild kann das bereits anhand von Figur 1 erläuterte Verfahren zur Zwischenzeileninterpolation angewendet werden, wobei sowohl bei der Tiefpassfilterung zur Erzeugung eines interpolierten Bildinformationswertes als auch bei der Hochpassfilterung die Position eines zu interpolierenden Bildbereiches bezogen auf die Originalbildbereiche zu berücksichtigen ist. Bei der Tiefpassfilterung zur Erzeugung des interpolierten Bildinformationswertes wird dabei der Bildinformationswert des Bildbereiches stärker gewichtet, der näher zu dem zu interpolierenden Bildbereich liegt. Dies wird anhand von Figur 3b nachfolgend erläutert.

Mit dem Bezugszeichen 81 ist in Figur 3b eine Gruppe von Bildbereichen bezeichnet, die in dem reduzierten Bild in der Richtung r = (1,1) benachbart zueinander angeordnet sind. Diese Gruppe von Bildbereichen umfasst den Originalbildpunkt 37 der Originalbildzeile 3 sowie einen zu interpolierenden Bildpunkt 416 in der zu interpolierenden Bildzeile 41 und den zu interpolierenden Bildpunkt 218 in der zu interpolierenden Bildzeile 21. Diese Bildpunkte sind in Figur 3a mit entsprechenden Bezugszeichen ebenfalls eingezeichnet. Zur Ermittlung eines Teilgütemaßes M' für diese Gruppe 81 werden die Bildinformationswerte der Bildbereiche dieser Gruppe hochpassgefiltert, wobei die angewendete Hochpassfilterung so gewählt ist, dass von den zu interpolierenden Bildbereichen 416, 218 der Bildinformationswert des Bildbereiches stärker gewichtet wird, der näher an dem Originalbildbereich 37 liegt. Die Bildinformationswerte der zu interpolierenden Bildbereiche können dabei insbesondere proportional zu deren Abstand zu der Bildzeile des Originalbildbereiches 37 gewichtet werden.

Berücksichtigt man, dass der Abstand des Bildbereiches 416 zu dem Bildbereich 37 nur eine Zeile beträgt, während der Abstand des Bildbereiches 218 zu dem Bildbereich 37 drei Zeilen beträgt, so könnte der Bildinformationswert des Bildbereiches 416 dreimal so stark gewichtet werden, wie der Bildinformationswert des Bildbereiches 218. Das Gütemaß M' für die Gruppe 81 könnte wie folgt ermittelt werden:

$$M'_{81}(1,1) = 1/8 \cdot [-1 \cdot S218 + 4 \cdot S37 - 3 \cdot S416] \qquad (11).$$

Die Koeffizienten einer solchen Hochpassfilterung lauten also -1/8, 1/2, -3/8.

Allgemein würde die Bedingung für eine solche Hochpassfilterung lauten:

$$M'_{81}(1,1) = (-c \cdot S218 + (c + d) \cdot S37 - d \cdot S416) \quad (12).$$

c und d bezeichnen dabei jeweils den Abstand zwischen der Zeile mit dem Bildbereich 416 und der Zeile mit dem Bildbereich 37 bzw. der Zeile mit dem Bildbereich 218 und der Zeile mit dem Bildbereich 37.

Die Ermittlung eines interpolierten Bildinformationswertes unter Berücksichtigung der Bildinformationswerte benachbarter Originalbildbereiche erfolgt in entsprechender Weise gewichtet. So wird der Bildinformationswert des Originalbildbereiches stärker gewichtet, der näher zu dem zu interpolierenden Bildbereich liegt. Soll der Bildinformationswert S415 des zu interpolierenden Bildbereiches 415 beispielsweise in der vertikalen Richtung r = (0,1) unter Verwendung der Bildinformationswerte S35, S55 der Originalbildzeilen 3, 5 interpoliert werden, so wird der Bildinformationswert S35 der Bildzeile 3, die näher zu dem zu interpolierenden Bildbereich 415 liegt, stärker gewichtet. Eine mögliche Funktion für die Erzeugung des interpolierten Bildinformationswertes S415 könnte lauten:

$$S415 = 0,25 \cdot (3 \cdot S35 + S55) \quad (13).$$

Das erfindungsgemäße Verfahren das anhand der Figuren bisher für eine Interpolation von Zwischenzeilenbildpunkten erläutert wurde, ist nicht auf diese Anwendung beschränkt. Das erfindungsgemäße Verfahren eignet sich vielmehr zur Interpolation beliebiger Bildinformationswerte, die einzelnen matrixartig angeordneten Bildbereichen in einem Bild zugeordnet sind. Das Verfahren eignet sich insbesondere auch für die Erhöhung der Auflösung eines Bewegungsvektorfeldes, was nachfolgend anhand von Figur 4 erläutert wird.

Figur 4a zeigt ausschnittsweise ein Bild, das in eine Anzahl Bildblöcke A-J unterteilt ist, denen jeweils ein Bewegungsvektor Va-Vj zugeordnet ist. Jeder dieser Bildblöcke weist eine Anzahl matrixartig angeordneter Bildpunkte auf, was für den Bildblock A in Figur 4a durch gestrichelt dargestellte Quadrate veranschaulicht ist. Verfahren zur Ermittlung von Bewegungsvektoren, die einzelnen Bildblöcken eines Bildes zugeordnet sind, sind hinlänglich bekannt, so dass hierzu keine weiteren Ausführungen erforderlich sind.

Bewegungsvektoren werden benötigt, um bei der Interpolation von Zwischenbildern zwischen zwei aufeinanderfolgenden Bildern einer Bildfolge Bewegungsabläufe bewegungsrichtig darstellen können. Für eine möglichst exakte Darstellung solcher Bewegungsabläufe ist es dabei wünschenswert, eine möglichst hohe Auflösung des Bewegungsvektorfeldes zu erhalten, d. h. möglichst kleine Bildblöcke zu erhalten, denen jeweils ein eigener Bewegungsvektor zugeordnet ist.

Zur Erhöhung der Auflösung des Bewegungsvektorfeldes ist Bezug nehmend auf Figur 4b vorgesehen, das Blockraster gemäß Figur 4a, das nachfolgend als erstes Blockraster bezeichnet wird, zu verkleinern. Hierbei wird das Bild in ein zweites Blockraster unterteilt, das eine Gruppe von ersten Blöcken A1-J1 umfasst, die jeweils vollständig in den ursprünglichen Bildblöcken A-J des ersten Rasters enthalten sind. Die Unterteilung des Bildes erfolgt dabei zunächst nur in einer Richtung, in dem Beispiel in vertikaler Richtung, die wieder als y-Richtung bezeichnet ist. In der horizontalen Richtung behalten die Blöcke zunächst ihre ursprüngliche Breite bei. Durch die Unterteilung in die kleineren Bildblöcke des zweiten Blockrasters entsteht eine Gruppe von zweiten Bildblöcken AD-FJ, die jeweils zwischen zwei ersten Bildblöcken A1-J1 angeordnet sind, und die jeweils zwei benachbarte Blöcke des ersten Blockrasters überlappen. Jeder der Bildblöcke des in Figur 4b dargestellten zweiten Blockrasters ist vorzugsweise gleich groß und umfasst eine Anzahl von Bildpunkten, die für den Bildblock A1 gestrichelt als Quadrate dargestellt sind.

Die Anzahl der Bildpunkte eines Blockes des zweiten Blockrasters ist in dem Beispiel um den Faktor 2 gegenüber der Anzahl der Bildpunkte eines Blocks des ersten Blockrasters reduziert, woraus eine Erhöhung der Auflösung des Vektorfeldes um einen Faktor 2 resultiert.

Den ersten Bildblöcken A1-J1 des zweiten Blockrasters sind jeweils die Bewegungsvektoren der Bildblöcke des ersten Rasters zugeordnet, aus denen sie hervorgegangen sind. Diese ersten Bildblöcke A1-J1 bilden Originalbildbereiche für die Durchführung des erfindungsgemäßen Verfahrens. Die in vertikaler Richtung jeweils zwischen zwei solchen Bildblöcken A1-J1 liegenden zweiten Bildblöcke AD-FJ des zweiten Rasters bilden zu interpolierende Bildbereiche für die Durchführung des erfindungsgemäßen Verfahrens. Zu interpolierende Bildinformationswerte für diese zu interpolierenden Bildbereiche AD-FJ sind Bewegungsvektoren, wobei jeder Bewegungsvektor zwei Bewegungsvektorkomponenten, eine x-Komponente und eine y-Komponente umfasst. Für die Interpolation eines Bewegungsvektors zu einem zu interpolierenden Bildbereich AD-FJ ist das erfindungsgemäße Verfahren somit zweimal durchzuführen, nämlich einmal für die x-Komponente des Bewegungsvektors und einmal für die y-Komponente des Bewegungsvektors. Die Bewegungsvektoren Va-Vj der Originalbildbereiche sind hierbei in ihre Bewegungsvektorkomponenten zu unterteilen, wobei bei einer ersten Durchführung des Verfahrens, bei dem beispielsweise die x-Komponente der Bewegungsvektoren der zu interpolierenden Bildbereiche ermittelt werden, nur die x-Komponenten der Bewegungsvektoren der Originalbildbereiche berücksichtigt werden, und wobei bei einer Interpolation der y-Komponenten der Bewegungsvektoren der zu interpolierenden Bildbereiche nur die y-Komponenten der Bewegungsvektoren der Originalbildbereiche berücksichtigt werden.

In Figur 4b sind gestrichelt die interpolierten Bewegungsvektoren für die zu interpolierenden Bildbereiche Ad-Fj dargestellt, die nach Abschluss des iterativen Interpolationsverfahrens zur Verfügung stehen.

Bezug nehmend auf Figur 4c kann eine weitere Auflösung des Bewegungsvektorfeldes in einem nächsten Schritt dadurch erreicht werden, dass die Blöcke des zweiten Blockrasters in horizontaler Richtung in kleinere Blöcke unterteilt werden, wie dies in Figur 4c für die Blöcke A1, B1, AD, BE, D1, E1 dargestellt ist. Diese kleineren Blöcke bilden ein drittes Blockraster. Dieses dritte Blockraster umfasst Bildblöcke, die vollständig in jeweils einem Bildblock des zweiten Rasters enthalten sind und denen die Bewegungsvektoren dieser Bildblöcke des zweiten Blockrasters zugeordnet sind. Des Weiteren entstehen durch die Unterteilung in das dritte Blockraster Zwischenblöcke, die jeweils durch zwei in horizontaler Richtung benachbart zueinander angeordnete Blöcke des zweiten Blockrasters gebildet sind. Diese Bildblöcke sind in Figur 4c mit den Bezugszeichen A1B1, ADBE, D1E1 bezeichnet. Die Blöcke, die vollständig durch die Blöcke des zweiten Rasters gebildet sind, sind in Figur 4c mit dem Bezugszeichen A11, B11, AD1, BE1, D11, E11 bezeichnet. Diese zuletzt genannten Bildblöcke bilden Originalbildbereiche für die Durchführung des erfindungsgemäßen Verfahrens, während die Bildblöcke A1B1, ADBE, D1E1 zu interpolierende Bildbereiche bilden.

Für diese zu interpolierenden Bildbereiche wird das erfindungsgemäße Verfahren zur Interpolation von Bewegungsvektoren durchgeführt, wobei das Verfahren zweimal durchgeführt wird, einmal zur Interpolation der x-Komponenten der Bewegungsvektoren, und einmal zur Interpolation der y-Komponenten der Bewegungsvektoren.

Die zuvor erläuterten Schritte können noch so oft wiederholt werden, bis eine Unterteilung erreicht ist, bei dem jeder Block des Blockrasters nur noch einen Bildpunkt umfasst, dem dann ein Bewegungsvektor zugeordnet ist.

Das erfindungsgemäße Verfahren zur Interpolation von Bildinformationswerten, die Bildbereichen eines Bildes zugeordnet sind, eignet sich auch für die Interpolation eines oder mehrere Bildinformationswerte zu einem Bildblock, der mehrere matrixartig angeordnete Bildpunkte umfasst und zu dem - beispielsweise aufgrund einer fehlerhaften Datenübertragung - keine oder nicht korrekte Bildinformationswerte vorhanden sind. Die Anwendung des erfindungsgemäßen Verfahrens auf die Interpolation von Bildinformationswerten zu einem solchen Bildblock wird nachfolgend anhand von Figur 5 erläutert.

Figur 5a zeigt ausschnittsweise ein Bild, dass eine Vielzahl matrixartig angeordneter Bildpunkte umfasst, die als Quadrate dargestellt sind. Mit dem Bezugszeichen 200 ist ein Bildblock bezeichnet, der eine Anzahl matrixartig angeordneter Bildpunkte, in dem Beispiel 4x4 Bildpunkte umfasst, zu denen keine oder nicht korrekte Bildinformationswerte vorliegen.

Mittels des erfindungsgemäßen Verfahrens wird zu diesem Bildblock 200 zunächst ein einziger Bildinformationswert interpoliert, der allen Bildpunkten dieses Bildblockes zugewiesen wird. Bezug nehmend auf Figur 5b werden die Bildpunkte des Bildes in der Umgebung des zu interpolierenden Bildblockes 200 zu Bildblöcken 210-280 zusammengefasst, die die gleiche Größe wie der zu interpolierende Bildblock 200, also 4x4 Bildpunkte, besitzen.

Diesen Bildblöcken 210-280 wird jeweils ein Bildinformationswert zugewiesen, indem beispielsweise eine Tiefpassfilterung der Bildinformationswerte der einzelnen Bildpunkte dieser Blöcke 210-280 durchgeführt wird. Diese Bildblöcke 210-280 mit dem ihnen zu gewiesenen Bildinformationswert bilden Originalbildbereiche zur Durchführung des erfindungsgemäßen Verfahrens. Der zu interpolierende Bildblock 200 bildet einen zu interpolierenden Bildbereich zur Durchführung des erfindungsgemäßen Verfahrens.

Unter Verwendung der Originalbildbereiche 210-280 mit den ihnen zugewiesenen Bildinformationswerten wird das zuvor erläuterte iterative Interpolationsverfahren durchgeführt, um für den zu interpolierenden Bildblock 200 einen Bildinformationswert zu interpolieren.

Die Auflösung des zu interpolierenden Bildblockes wird nachfolgend erhöht, um nach und nach den einzelnen Bildpunkten dieses Bildblockes Bildinformationswerte zuzuordnen. Hierfür gibt es verschiedene Möglichkeiten, die nachfolgend anhand der Figuren 6 und 7 erläutert werden.

Bei einer ersten Alternative zur Erhöhung der Auflösung ist bezugnehmend auf Figur 6a vorgesehen, den Block 200 in einer Richtung, in dem Beispiel in vertikaler Richtung in gleich große Unterblöcke 200 zu unterteilen, denen zunächst der Bildinformationswert des Bildblockes 200 als Start-Interpolationswert zugewiesen ist. Die Bildpunkte in der Umgebung des zu interpolierenden Bildblocks werden zu Bildblöcken gleicher Größe zusammengefasst. Den dadurch entstehenden benachbarten Bildblöcken wird jeweils ein Bildinformationswert zugewiesen, der beispielsweise durch eine Filterung, insbesondere eine Tiefpassfilterung, der Bildinformationswerte der einzelnen Bildpunkte dieser Blöcke gebildet ist. Diese benachbarten Bildblöcke bilden hierbei Originalbildbereiche für die Durchführung des erfindungsgemäßen Interpolationsverfahrens.

Das zuvor erläuterte iterative Interpolationsverfahren wird anschließend auf jeden der beiden Blöcke 201, 202 angewendet, um jedem dieser Blöcke einen Bildinformationswert zuzuordnen. Bei der Interpolation des Bildinformationswertes eines der Blöcke besteht die Möglichkeit den jeweils anderen zu interpolierenden Bildblock unberücksichtigt zu lassen, wie dies bereits für das Skalierungsverfahren anhand von Figur 3 erläutert wurde. Angewendet auf die in Figur 6a dargestellte Situation bedeutet dies, dass für die Interpolation des Bildinformationswertes eines der Bildblöcke 201, 202 nur die Bildinformationswerte von Original-Bildblöcken berücksichtigt werden, wobei diese Bildinformationswerte entsprechend ihres Abstandes zu dem zu interpolierenden Bildblock gewichtet werden.

Darüber hinaus besteht die Möglichkeit, bei der Interpolation des Bildinformationswertes zu einem der Blöcke 201, 202 den anderen der beiden Blöcke als Original-Bildblock zu behandeln und diesen anderen der beiden Blöcke bei der Interpolation zu berücksichtigen. Der Bildinformationswert dieses anderen Bildblocks entspricht hierbei dem zuvor für den Block 200 ermittelten Bildinformationswert. Die Durchführung des Interpolationsverfahrens entspricht dann dem anhand von Figur erläuterten Zwischenzeileninterpolationsverfahren, mit dem Unterschied, dass bei der Situation gemäß Figur 6a sich zu interpolierende Bildbereiche in dem Bild nicht regelmäßig wiederholen.

In einem nächsten Verfahrensschritt wird die Auflösung des Blockes weiter um einen Faktor 2 erhöht, indem der Block 200 in horizontaler Richtung geteilt wird, wodurch vier Bildblöcke 203, 204, 205, 206 entstehen. Auf diese vier Bildblöcke wird anschließend das zuvor für die Blöcke 201, 202 erläuterte Verfahren zur Interpolation von Bildinformationswerten angewendet. Die Start-Interpolationswerte dieser Bildblöcke 202-206, die durch Unterteilung der Blöcke 201, 202 entstanden sind, entsprechen dem zuvor interpolierten Bildinformationswert des Blockes, aus dem sie durch Unterteilung hervorgegangen sind.

Für die Durchführung des Interpolationsverfahrens werden die Bildpunkte in der Umgebung der zu interpolierenden Bildblöcke 203-206 zu Bildblöcken gleicher Größe, wie die zu interpolierenden Bildblöcke 203-206 zusammengefasst. Diese Bildblöcke bilden Originalbildbereiche für die Durchführung des iterativen Interpolationsverfahrens.

Während für die Interpolation der Bildblöcke 201, 202 gemäß Figur 6a als Start-Interpolationsrichtung vorzugsweise die vertikale Richtung gewählt wird, beginnt das Verfahren zur Interpolation der kleineren Bildblöcke 203-206 vorzugsweise mit der horizontalen Richtung als Start-Interpolationsrichtung. Allgemein gilt, dass bei der Interpolation eines Bildinformationswertes zu einem Unterblock eines Bildblockes die Richtung als Start-Interpolationsrichtung bevorzugt wird, in der eine Unterteilung des Bildblockes zur Erzeugung des Unterblocks erfolgt ist.

Bezugnehmend auf Figur 6c erfolgt eine erneute Erhöhung der Auflösung um den Faktor 2, indem die Blöcke 203-206 in vertikaler Richtung in jeweils gleich große Unterblöcke unterteilt werden, von denen in Figur 6c einer mit dem Bezugszeichen 207 bezeichnet ist. Auf jeden dieser Unterblöcke 207 wird anschließend das iterative Interpolationsverfahren angewendet, wobei den einzelnen Blöcken 207 als Start-Interpolationswert der Bildinformationswert desjenigen der Blöcke 202-206 zugewiesen ist, aus dem der jeweilige Unterblock hervorgegangen ist. Für die Durchführung des Interpolationsverfahrens werden die Bildpunkte in der Umgebung des zu interpolierenden Gesamt-Bildblocks 200 entsprechend wie bei den anhand der Figuren 6a und 6b erläuterten Verfahren zu Bildblöcken zusammengefasst, deren Größe der Größe der zu interpolierenden Unterblöcke entspricht.

Nachdem den einzelnen Bildblöcken 207 mittels des iterativenein Bildinformationswert zugewiesen wurde, erfolgt eine weitere Unterteilung dieser Bildblöcke in horizontaler Richtung, wobei in dem Beispiel, bei dem der zu interpolierende Bildblock 4x4 Bildpunkte umfasst, dann eine bildpunktweise Auflösung erreicht ist. Auf diese einzelnen Bildpunkte wird dann das iterative Interpolationsverfahren angewendet, um jedem einzelnen Bildpunkt einen Bildinformationswert zuzuordnen. Als Start-Interpolationswerte für die einzelnen Bildpunkte werden dabei die zuvor ermittelten Bildinformationswerte der Bildblöcke 207, aus denen sie hervorgegangen sind, verwendet.

Bei dem zuvor anhand von Figur 6 erläuterten Verfahren wird die Auflösung des interpolierenden Bildblocks sukzessive erhöht, indem der Block nach und nach abwechselnd in vertikaler und horizontaler Richtung unterteilt wird. Selbstverständlich besteht hierbei auch die Möglichkeit, zunächst mit einer Unterteilung in horizontaler Richtung zu beginnen.

Anhand von Figur 7 wird nachfolgend ein Verfahren erläutert, bei dem die Auflösung des Blockes von den Rändern des Blockes her erhöht wird.

Bezugnehmend auf Figur 7a wird der zu interpolierende Bildblock in einer Richtung, in dem Beispiel in vertikaler Richtung in drei Bildblöcke, einen ersten, einen zweiten und einen dritten Bildblock 210, 211, 212 unterteilt. Die "Breite" der ersten und dritten Bildblöcke in vertikaler Richtung beträgt dabei nur einen Bildpunkt, eine Breite dieser Blöcke 210, 212 in horizontaler Richtung beträgt in dem Beispiel vier Bildpunkte. Für jeden der Bildpunkte des ersten und dritten Bildblocks wird anschließend unter Verwendung des iterativen Interpolationsverfahrens ein Bildinformationswert interpoliert. Die Bildpunkte des "mittleren" Bildblocks 211 werden dabei als Originalbildpunkte behandelt, denen der zuvor ermittelte Bildinformationswert des Bildblockes 200 zugeordnet ist.

Bezugnehmend auf Figur 7b wird die Auflösung des Bildblockes anschließend in horizontaler Richtung erhöht, in dem der Bildblock in dieser horizontalen Richtung weiter unterteilt wird, indem vierte und fünfte Bildblöcke 213, 214 gebildet, werden, die in horizontaler Richtung jeweils eine Breite von einem Bildpunkt und in vertikaler Richtung eine Breite von vier Bildpunkten besitzen. Aus dem ersten zweiten und dritten Bildblock entstehen hierdurch verkleinerte Bildblöcke 210', 211', 212'. Zu jedem der dieser Bildpunkte dieser vierten und fünften Bildblöcke wird anschließend ein Bildinformationswert unter Verwendung des erfindungsgemäßen iterativen Interpolationsverfahrens ermittelt. Die übrigen Bildpunkte des Bildblocks, also die Bildpunkte der verkleinerten Bildblöcke 210', 211', 212' werden hierbei als Originalbildpunkte behandelt, denen die interpolierten Bildinformationswerte des ersten, zweiten und dritten Bildblocks zugewiesen sind.

Für die Bildblöcke 210, 212, 213, 214 ist nach Durchführung dieser Verfahrensschritte eine Auflösung auf Bildpunktebene erreicht, während der zentrale Bildblock 211', mit 2x2 Bildpunkten, dem nur ein Bildinformationswert zugewiesen ist, noch eine geringere Auflösung besitzt. Dieser zentrale Bildblock 211' wird im weiteren wie der ursprüngliche Block 200 behandelt, indem dessen Auflösung in horizontaler Richtung und vertikaler Richtung von den Rändern her jeweils in "1-Bildpunkt-Schritten" erhöht wird.

Bezugnehmend auf Figur 7c wird der zentrale Bildblock hierzu zunächst in vertikaler Richtung weiter unterteilt, so dass Bildblöcke 215, 216 mit jeweils einer Breite von zwei und einer Höhe von einem Bildpunkt entstehen. Jedem Bildpunkt dieser Bildblöcke 215, 216 wird anschließend unter Anwendung des erfindungsgemäßen iterativen Verfahrens ein Bildinformationswert zugewiesen.

Optional besteht die Möglichkeit, in horizontaler Richtung mit der Unterteilung in Blöcke der Breite vier Bildpunkte und der Höhe ein Bildpunkt fortzufahren und jedem der Bildpunkte dieser Blöcke einen Bildinformationswert mittels des iterativen Interpolationsverfahrens zuzuordnen. In diesem Fall wird zu den Bildpunkten der Blöcke 213, 214, die in horizontaler Richtung benachbart zu dem zentralen Bereich 211' liegen, erneut ein Bildinformationswert interpoliert.

Bezugnehmend auf Figur 7d wird der Bildblock 211' anschließend in horizontaler Richtung durch Bildung von Bildblöcken 217, 218, die jeweils eine Breite von einem Bildblock und eine Höhe von zwei Bildpunkten besitzen, unterteilt und jedem der Bildpunkte dieser Bildblöcke 217, 218 wird mittels des iterativen Verfahrens ein Bildinformationswert zugewiesen.

Optional besteht die Möglichkeit, in vertikaler Richtung mit der Unterteilung in Blöcke der Breite ein Bildpunkt und der Höhe vier Bildpunkte fortzufahren und jedem der Bildpunkte dieser Blöcke einen Bildinformationswert mittels des iterativen Interpolationsverfahrens zuzuordnen. In diesem Fall wird zu den Bildpunkten der Blöcke 210, 211, die in vertikaler Richtung benachbart zu dem zentralen Bereich 211' liegen, erneut ein Bildinformationswert interpoliert.

Nach Durchführung dieser Schritte ist für den ursprünglich zu interpolierenden Bildblock 200 eine Auflösung auf Bildpunktebene erreicht. Das zuvor erläuterte Verfahren kann entsprechend auch auf Bildblöcke mit mehr als 4x4 Bildpunkten angewendet werden, wobei in jedem Fall die Auflösung von den Rändern her in 1-Bildpunkt-Schritten erhöht wird.

In nicht näher dargestellter Weise besteht auch die Möglichkeit, den zu interpolierenden Block feiner zu unterteilen als dessen Umgebung, d.h. den Block bis unter die Bildpunktauflösung zu unterteilen. So könnte der Block 200 gemäß Figur 7 beispielsweise in 8x8 Subpixel unterteilt werden, von denen 2x2 je einem Bildpunkt zuzuordnen sind, und zu jedem dieser Subpixel einen Pixelinformationswert zu interpolieren. Nach Abschluss dieses Verfahrens wird aus den Informationswerten der Subpixel, die einem Bildpunkt zugeordnet sind, der Bildinformationswert des jeweiligen Bildpunktes gebildet.

Ein solches Vorgehen kann insbesondere sinnvoll sein, um auch für einen Zentralbereich, beispielsweise den Bereich 211', für den die Auflösung zunächst gröber bleibt, wenn die Auflösung vom Rand her symmetrisch erhöht wird, ein zufriedenstellendes Interpolationsergebnis zu erhalten.

Bezugnehmend auf den Verfahrensschritt 105 in Figur 2 wurde für die bisherige Erläuterung des Verfahrens davon ausgegangen, dass während des Iterationsprozesses jeweils eine von zwei Interpolationsrichtungen anhand eines Vergleichs der Gütemaße dieser Interpolationsrichtungen ausgewählt wird und dass eine Interpolation in dieser ausgewählten Richtung erfolgt. Diese Auswahl setzt voraus, dass die Gütemaße dieser Interpolationsrichtungen voneinander abweichen. Bei einer Abwandlung des bisher erläuterten Verfahrens ist nun vorgesehen, beide Interpolationsrichtungen für die Interpolation zu verwenden, wenn der Betrag einer Differenz der Gütemaße kleiner als ein vorgegebener Wert $\delta$ ist. Die in Figur 2 erläuterten Verfahrensschritte 105, 106 werden dann durch die nachfolgend anhand von Figur 8 erläuterten Verfahrensschritte ergänzt.

Nach dem Verfahrensschritt 104, bei dem das Gütemaß M(r)für wenigstens eine weitere Interpolationsrichtung r ermittelt wird, wird bei diesem Verfahren in einem Verfahrensschritt 115 ermittelt, ob der Betrag einer Differenz der Gütemaße kleiner als ein vorgegebener Differenzwert $\delta$ ist, ob also

$$|M(r) - M(ri)| < d \tag{14}$$

gilt. Ist diese Bedingung erfüllt, werden in einem Schritt 116 zwei Interpolationen durchgeführt, eine erste Interpolation in der Interpolationsrichtung r, um einen ersten Interpolationswert $S_r(a,b)$ zu erhalten, und eine zweite Interpolation in der Interpolationsrichtung ri, um einen zweiten Interpolationswert $S_{ri}(a,b)$ zu erhalten. Diese Interpolationswerte werden anschließend gemischt, um den im weiteren Verfahren verwendeten Interpolationswert S(a,b) zu erhalten. Diese Mischung erfolgt beispielsweise durch eine gewichtete Addition gemäß:

$$S(a,b) = g1 \cdot S_r(a,b) + g2 \cdot S_{ri}(a,b) \text{ mit } g2=1-g1 \qquad (15).$$

Die Gewichtungsfaktoren g1, g2 können hierbei fest vorgegeben sein, beispielsweise mit gl=g2=0,5. Alternativ können die Gewichtungsfaktoren g1, g2 von der Differenz der Gütemaße abhängig sein, beispielsweise derart, dass der Interpolationswert stärker gewichtet wird, dessen zugehörige Interpolationsrichtung das kleinere (bessere) Gütemaß liefert. Die Gewichtung kann dabei um so stärker sein, je größer die Differenz ist.

Das Gütemaß der bislang besten Richtung ri, das weniger als den Wert $\delta$ von dem Gütemaß der Richtung r abweicht, bleibt hierbei gespeichert, um in einem nächsten Iterationsschritt mit dem Gütemaß einer weiteren Richtung r verglichen zu werden.

Ist die im Verfahrensschritt 115 überprüfte Bedingung (14) nicht erfüllt, werden die bereits erläuterten Verfahrensschritte 105 zur Ermittlung der besten Richtung ri und 106 zur Interpolation in dieser besten Richtung ri durchgeführt.

Um Rechenaufwand zu sparen, kann vor Durchführung des Interpolationsverfahrens im Verfahrensschritt 106 in einem Verfahrensschritt 118 optional überprüft werden, um die während des jeweiligen Iterationsschrittes neu überprüfte Richtung r ein besseres Gütemaß wie die Vergleichsrichtung ri liefert. Eine Interpolation wird hierbei nur dann durchgeführt, wenn diese "neue" Richtung ein besseres Ergebnis liefert. Das bis dahin ermittelte Interpolationsergebnis S(a,b), das bezugnehmend auf den Verfahrensschritt 117 auch eine Mischung wenigstens zweier Interpolationsergebnisse sein kann, bleibt hierbei so lange gespeichert, bis eine "bessere" Richtung ermittelt wird.

Bei einer Abwandlung des zuvor anhand von Figur 8 erläuterten Verfahrens ist bei Vorliegen der Bedingung (14) vorgesehen, den bisherigen durch Interpolation in der Richtung ri erhaltenen Interpolationswert beizubehalten anstatt eine Mischung zweier Interpolationswerte $S_r(a,b)$, $S_{ri}(a,b)$ durchzuführen. Die Verfahrensschritte 116, 117 entfallen bei dieser Alternative des Verfahrens.

Bei einer weiteren Abwandlung des Verfahrens ist vorgesehen, die zuvor erläuterten Iterationsschritte zur Ermittlung der besten Interpolationsrichtung parallel für mehrere benachbarte Bildbereiche eines Bildes durchzuführen, um für jeden Bildbereich während eines Iterationsschrittes eine erste Interpolationsrichtung zu erhalten. Diese Interpolationsrichtungen, bzw. die die Interpolationsrichtungen repräsentierenden Direktoren werden hierbei einer Filterung unterzogen, um für jeden Bildbereich eine gefilterte Interpolationsrichtung zu erhalten. Eine nachfolgende Interpolation erfolgt hierbei für jeden Bildbereich in der Richtung der gefilterten Interpolationsrichtung.

Figur 9 veranschaulicht ein derart abgewandeltes Verfahren anhand des Signalflussdiagramms, wobei lediglich die gegenüber den bislang erläuterten Verfahren abgewandelten Verfahrensschritte dargestellt sind. Zwischen dem Verfahrensschritt 105, in dem während jedes Interpolationsschrittes eine für einen Bildbereich - der nachfolgend als aktueller Bildbereich bezeichnet wird - beste Interpolationsrichtung ri ermittelt wird, und dem Verfahrensschritt 106, in dem interpoliert wird, wird bei diesem Verfahren in einem Verfahrensschritt 119 eine Filterung durchgeführt, die die bis dahin beste Interpolationsrichtung des aktuellen Bildbereiches unter Berücksichtigung der bis dahin ermittelten besten Interpolationsrichtungen benachbarter Bildbereiche filtert. Es gilt:

$$ri' = f(ri, ri_1, .., ri_n) \qquad (16),$$

wobei ri' die gefilterte Interpolationsrichtung, ri die bis dahin beste Interpolationsrichtung für einen gegebenen Bildbereich, $ri_1...ri_n$ die bis dahin besten Interpolationsrichtungen benachbarter Bildbereiche bezeichnen und f(.) eine Filterfunktion bezeichnet. Diese Filterung kann während jedes Iterationsschrittes durchgeführt werden. Außerdem besteht auch die Möglichkeit, diese Filterung nur einmal am Ende des Iterationsprozesses durchzuführen, wenn für jeden Bildbereich die beste Interpolationsrichtung vorliegt. Diese besten Interpolationsrichtungen werden dann gefiltert, um gefilterte Interpolationsrichtungen zu erhalten, bevor eine abschließende Interpolation in den gefilterten Interpolationsrichtungen erfolgt.

Ausgehend von einem Bild, in dem einzelne Bildbereiche matrixartig angeordnet sind, werden für die Filterung der Interpolationsrichtung eines aktuellen Bildbereiches beispielsweise die Interpolationsrichtungen aller Bildbereiche berücksichtigt, die unmittelbar benachbart zu dem aktuellen Bildbereich liegen. Dieses Vorgehen ist in Figur 10 veranschaulicht, in dem schematisch einzelne Bildbereiche 500-508 und die den jeweiligen Bildbereichen 500-508 zugeordneten besten Interpolationsrichtungen ri-$ri_8$ dargestellt sind. An einen Bildbereich 500 mit der Interpolationsrichtung ri schließen sich hierbei acht Bildbereiche 501-508 mit Interpolationsrichtungen $ri_1...ri_8$ unmittelbar an.

Die Filterung, die dem aktuellen Bildbereich 500 mit der bis dahin besten Interpolationsrichtung ri einen gefilterte Interpolationsrichtung ri' zuordnet, ist beispielsweise eine Medianfilterung, der die Interpolationsrichtung des aktuellen Bereiches und die Interpolationsrichtungen der acht umgebenden Bereiche zugeführt sind und die den Median dieser insgesamt neun Interpolationsrichtungen als gefilterte Interpolationsrichtung ausgibt. Bei einer Normierung der Bildrichtungen r derart, dass eine Richtungskomponente stets Eins ist, genügt eine Filterung der anderen Richtungskomponente der Bildrichtungen.

Die Interpolationsrichtungen der Bildbereiche können noch während der Filterung aktualisiert, so dass bei der Filterung weiterer Bildbereiches während eines Filterdurchlaufs gegebenenfalls bereits gefilterte Interpolationsrichtungen verwendet werden. Das Filterergebnis kann dabei allerdings von der Reihenfolge abhängig sein, in der zu den einzelnen Bildbereichen gefilterte Interpolationsrichtungen ermittelt werden. Soll diese Abhängigkeit vermieden werden, werden bei der Ermittlung gefilterter Interpolationsrichtungen zu einer Gruppe von Bildbereichen, nur die zunächst, d.h. vor dem Filterdurchlauf ermittelten, Interpolationsrichtungen berücksichtigt.

Die auf die zuvor erläuterte Weise erhaltene gefilterte Interpolationsrichtung ri' wird als beste Interpolationsrichtung für den aktuellen Bildbereich übernommen (Schritt 120) und der Interpolation im Verfahrensschritt 106 zugrunde gelegt.

Es sei darauf hingewiesen, dass einzelne oder alle der den zu interpolierenden Bildbereich 500 umgebenden Bildbereiche 501-508 auch Originalbildbereiche sein können, zu denen bereits Bildinformationen vorliegen. Zu solchen Originalbildbereichen können mit den gleichen iterativen Verfahrensschritten, mit denen zu einem zu interpolierenden Bildbereich eine Interpolationsrichtung ermittelt wird, Interpolationsrichtungen bestimmt werden, die anschließend für die Filterung verwendet werden.

Bei einer Ausführungsform des Verfahrens ist vorgesehen, die am Abschluss des Iterationsverfahrens, d.h. nach Erfüllen der Endbedingung im Verfahrensschritt 107, einem jeden Bildbereich eines aktuellen Bildes zugeordnete Interpolationsrichtung vor Durchführung einer abschließenden Interpolation "zeitlich zu filtern". Zur Filterung der Interpolationsrichtung eines aktuellen Bildbereiches eines aktuellen Bildes wird hierzu wenigstens eine Interpolationsrichtung herangezogen, die in wenigstens einem dem aktuellen Bild zeitlich benachbarten Bild einem Bildbereich zugeordnet ist, der sich an derselben Position wie der aktuelle Bildbereich befindet. Die abschließende Interpolation zur Ermittlung eines interpolierten Bildbereiches eines aktuellen Bildes erfolgt somit in einer Interpolationsrichtung ri'', für die gilt:

$$ri'' = f(ri, ri_{t-1}) \qquad (17).$$

ri bezeichnet hierbei eine für den Bildbereich des aktuellen Bildes nach Abschluss aller Iterationsschritte ermittelte beste Interpolationsrichtung, $ri_{t-1}$ bezeichnet die nach Abschluss aller Iterationsschritte beste Interpolationsrichtung für einen Bildbereich eines zeitlich benachbarten Bildes, der sich in diesem Bild an derselben örtlichen Position wie der aktuelle Bildbereich in dem aktuellen Bild befindet. Dieses Vorgehen ist in Figur 11 veranschaulicht, in der das Bezugszeichen 310 ein aktuelles Bild bezeichnet und die Bezugszeichen 320 und 330 zwei zeitlich zu dem aktuellen Bild benachbarte Bilder bezeichnet. Die Bezugszeichen 311, 321, 331 bezeichnen hierbei Bildbereiche an gleichen örtlichen Positionen in den einzelnen Bildern, denen jeweils Interpolationsrichtungen zugeordnet sind, die durch das zuvor erläuterte iterative Verfahren ermittelt wurden. Für die Interpolation des aktuellen Bildbereiches 311 wird hierbei eine Interpolationsrichtung verwendet, die sich durch Filterung der Interpolationsrichtungen der sich örtlich an derselben Position befindlichen jedoch zeitlich aufeinanderfolgenden Bildbereiche ergibt.

Bei den bisher erläuterten Verfahren werden zur Interpolation eines Bildinformationswertes zu einem Bildbereich eines Bildes originale oder bereits interpolierte Bildinformationswerte von Bildbereichen desselben Bildes verwendet. Die Interpolation erfolgt bei diesen Verfahren somit nur unter Verwendung von Bildinformationen aus einem Bild. Das erläuterte iterative Interpolationsverfahren eignet sich jedoch auch zur Interpolation sogenannter Zwischenbilder, also von Bildern, die zeitlich zwischen zwei Bildern liegen, was nachfolgend anhand von Figur 12 erläutert wird.

Figur 12 veranschaulicht schematisch eine Bildfolge mit zeitlich aufeinanderfolgenden Bildern. Dargestellt sind in Figur 12 drei Bilder, ein erstes Bild P1 zu einem Zeitpunkt t1, ein zweites Bild P2 zu einem Zeitpunkt t2 und ein drittes Bild P12 zu einem Zeitpunkt t12, das zeitlich zwischen dem ersten und zweiten Bild liegt. Die einzelnen Bilder P1, P2, P12 umfassen jeweils eine Anzahl matrixartig angeordneter Bildbereiche, die in dem Beispiel Bildpunkte sind, denen jeweils wenigstens ein Bildinformationswert, beispielsweise ein Luminanzwert und wenigstens ein Chrominanzwert, zugeordnet sind. Für die Erläuterung wird zunächst davon ausgegangen, dass das erste und zweite Bild P1, P2 jeweils Originalbilder sind, bei denen jedem Bildpunkt bereits ein Bildinformationswert zugewiesen ist, und dass das dritte Bild P12 ein zeitlich zwischen dem ersten und zweiten Bild P1, P2 zu interpolierendes Zwischenbild ist, bei dem zu jedem Bildpunkt ein Bildinformationswert zu interpolieren ist. Bildinformationswerte zu Bildpunkten dieser Bilder P1, P2, P12 werden nachfolgend mit $S_1(x,y)$, $S_2(x,y)$, $S_{12}(x,y)$ bezeichnet, wobei x und y für die Koordinaten der Bildpunkte in den einzelnen Bildern stehen.

Ein Ziel bei der Zwischenbildinterpolation ist eine korrekte Berücksichtigung von Bewegungsabläufen. Befindet sich ein Objekt in dem ersten Bild beispielsweise an einer ersten Position innerhalb des Bildes und in dem zweiten Bild an einer zweiten Position, so ist dieses Objekt in dem Zwischenbild an einer dritten Position darzustellen, die zwischen der ersten und zweiten Position liegt, wobei der Abstand dieser dritten Position zu der ersten und zweiten Position proportional ist zu dem zeitlichen Abstand des Zwischenbildes zu dem ersten Bild und dem zweiten Bild. Die Bewegung des Objekts von der ersten Position in dem ersten Bild zu der zweiten Position in dem zweiten Bild wird durch einen sogenannten Bewegungsvektor charakterisiert, der die Positionsänderung von dem ersten Bild zu dem zweiten Bild angibt.

Zu Zwecken der Erläuterung sei ein Bildpunkt an einer Position (a,b) in dem Zwischenbild P12 betrachtet. Zur Interpolation eines Bildinformationswertes $S_{12}(a,b)$ zu diesem Bildpunkt werden Bildinformationswerte von jeweils wenigstens einem Bildpunkt in dem ersten Bild und von wenigstens einem Bildpunkt in dem zweiten Bild verwendet, die in einer durch den Bewegungsvektor $v=(v_x,v_y)$ vorgegebenen Interpolationsrichtung benachbart zur Position (a,b) des zu interpolierenden Bildpunktes liegen. Für eine Interpolation unter Verwendung von nur zwei Bildpunkten gilt hierbei grundsätzlich:

$$S_{12}(a,b) = TP[S_1(a-d\cdot v_x, b-d\cdot v_y);\ S_2(a+(1-d)\cdot v_x, b+(1-d)\cdot v_y)] \quad (8)$$

wobei TP eine Tiefpassfilterung und $V_x$ und $v_y$ Komponenten des Bewegungsvektors bezeichnen. $d\cdot v_x$ und $d\cdot v_y$ bezeichnen hierbei den Abstand des zu interpolierenden Bildpunktes von dem für die Interpolation verwendeten Bildpunkt in dem ersten Bild P1, und $(1-d)\cdot v_x$ und $(1-d)\cdot v_y$ bezeichnen den Abstand des zu interpolierenden Bildpunktes von dem für die Interpolation verwendeten Bildpunkt in dem zweiten Bild P2. Für d gilt hierbei:

$$d = \Delta T1/(\Delta T1+\Delta T2), \quad (9)$$

wobei $\Delta T1$ den zeitlichen Abstand des Zwischenbildes P12 zu dem ersten Bild und $\Delta T2$ den zeitlichen Abstand des Zwischenbildes zu dem zweiten Bild bezeichnet. Liegt das Zwischenbild zeitlich in der Mitte zwischen dem ersten und zweiten Bild P1, P2, so gilt $\Delta T1 = \Delta T2$, und damit d=1-d=0,5.

Ist keine Bewegung vorhanden, so ist der Bewegungsvektor ein Nullvektor. Zur Interpolation werden dann die Bildpunkte in dem ersten und zweiten Bild P1, P2 verwendet, die in diesen Bildern an der Position des zu interpolierenden Bildpunkts liegen, es gilt also:

$$S_{12}(a,b) = TP[S_1(a,b);\ S_2(a,b)] \quad (10).$$

Der für die Interpolation benötigte Bewegungsvektor gibt eine räumliche und zeitliche Interpolationsrichtung vor, wobei die für die Interpolation verwendeten Bildpunkte des ersten und zweiten Bildpunktes in dieser räumlichen und zeitlichen Interpolationsrichtung benachbart zu der Position des zu interpolierenden Bildpunktes liegen. Hierunter ist zu verstehen, dass die Positionen der für die Interpolation verwendeten Bildpunkte in der Interpolationsrichtung benachbart zu der Position des zu interpolierenden Bildpunktes liegen, dass diese Bildpunkte jedoch zeitlich beabstandeten Bildern P1, P2 entstammen.

Das zuvor anhand der Figuren 1 bis 11 erläuterte iterative Verfahren zur Ermittlung einer nur räumlichen Interpolationsrichtung, d.h. einer Interpolationsrichtung innerhalb eines Bildes, kann entsprechend auf die Ermittlung einer räumlichen und zeitlichen Interpolationsrichtung, d.h. eines Bewegungsvektors, angewendet werden, wie nachfolgend anhand von Figur 13 erläutert wird, in der ein Ablaufdiagramm für dieses Verfahren dargestellt ist.

In einem ersten Verfahrensschritt 301 wird hierbei ein Startvektor vi ausgewählt. Dieser Startvektor ist beispielsweise ein Nullvektor. In einem nächsten Verfahrensschritt 302 wird ein erster Interpolationswert $S_{12}(a,b)$ zu dem zu interpolierenden Bildpunkt unter Verwendung dieses Startvektors ermittelt. Diese Interpolation erfolgt beispielsweise unter Anwendung der Gleichung (8), wobei als Bewegungsvektor der Startvektor zu verwenden ist.

Zu diesem Startvektor vi wird in einem nächsten Verfahrensschritt 303 ein Gütemaß M(vi) ermittelt. Die Ermittlung dieses Gütemaßes M(vi) kann die Ermittlung mehrerer Einzelgütemaße M' (vi) umfassen, wobei jeweils ein Einzelgütemaß zu einer Gruppe von Bildpunkten ermittelt wird, die wenigstens einen Bildpunkt in dem ersten Bild P1, einen Bildpunkt in dem Zwischenbild P12 und einen Bildpunkt in dem zweiten Bild P2 aufweist. Die Ermittlung der Einzelgütemaße erfolgt beispielsweise durch Hochpassfilterung der den Bildpunkten einer Gruppe zugeordneten Bildinformationswerte.

Ein Beispiel für ein Verfahren zur Ermittlung eines Gütemaßes für einen Bewegungsvektor v wird nachfolgend anhand der Figu-ren 14 und 15 erläutert.

Figur 14 zeigt beispielhaft drei Gruppen von Bildpunkten, die jeweils einen ersten Bildpunkt in dem ersten Bild P1, einen zweiten Bildpunkt in dem zweiten Bild P2, sowie einen dritten Bildpunkt in dem Zwischenbild P12 aufweisen. Der erste Bildpunkt einer jeden Gruppe liegt dabei am Anfang des zu untersuchenden Bewegungsvektors v, der zweite Bildpunkt liegt am Ende dieses Bewegungsvektors v und der dritte Bildpunkt liegt auf dem Bewegungsvektor v. Die Positionierung der einzelnen Bildpunkte der einzelnen Gruppen wird deutlich anhand von Figur 15, die diese Bildpunkte in einem Bild zeigt. Die ersten Bildpunkte sind dabei entsprechend Figur 14 strichpunktiert dargestellt, die zweiten Bildpunkte sind gepunktet dargestellt und die dritten Bildpunkte sind durchgezogen dargestellt. Die Gruppen sind in Figur 15 jeweils durch durchgezogene Linien veranschaulicht, die die einzelnen Bildpunkte einer Gruppe umgeben. Darüber hinaus ist in Figur 15 der zu untersuchende Bewegungsvektor v zu jeder dieser Gruppen dargestellt. Die drei unterschiedlichen Gruppen sind in Figur 15 mit den Bezugszeichen 210, 220, 230 bezeichnet. Die Bezugszeichen 211, 221, 231 bezeichnen die dem ersten Bild P1 entstammenden ersten Bildpunkte einer jeden Gruppe, die Bezugszeichen 213, 223, 233 bezeichnen die dem zweiten Bild P2 entstammenden zweiten Bildpunkte einer jeden Gruppe, und die Bezugszeichen 212, 222, 232 bezeichnen die dem Zwischenbild P12 entstammenden dritten Bildpunkte einer jeden Gruppe. Die zur Ermittlung eines Gütemaßes für einen gegebenen Bewegungsvektor verwendeten Gruppen von Bildpunkten können hierbei den zu interpolierenden Bildpunkt umfassen, wie dies bei dem in Figur 15 dargestellten Ausführungsbeispiel der Fall ist, bei dem dieser an der Position (a, b) zu interpolierende Bildpunkt in der zweiten Gruppe 220 enthalten ist.

Die Ermittlung eines Einzelgütemaßes zu dem Bewegungsvektor v für eine Gruppe von Bildpunkten erfolgt entsprechend der Erläuterungen zu den Gleichungen (3) und (4), beispielsweise durch Hochpassfilterung der den Bildpunkten einer Gruppe zugeordneten Bildinformationswerte. Ein Einzelgütemaß $M'(v)_{210}$ für den Bewegungsvektor v zu der ersten Gruppe 210 wird beispielsweise wie folgt ermittelt:

$$M'(v)_{210} = HP[S211,\ S212,\ S213] \qquad (11)$$

HP[.] bezeichnet hierbei Hochpassfilterung, beispielsweise mit den Filterkoeffizienten 0,25, 0,5 und -0,25.

Ein Gütemaß M(v) für den Bewegungsvektor V wird entsprechend der Ausführungen zu den Gleichungen (5a) und (5b) ermittelt, indem die Beträge der Einzelgütemaße oder geradzahlige Potenzen der Einzelgütemaße aufaddiert werden.

Die Gruppen von Bildpunkten, die zur Ermittlung eines Gütemaßes für einen gegebenen Bewegungsvektor v herangezogen werden, können beliebig gewählt werden. Figur 16 zeigt ein weiteres Beispiel solcher Bildpunktgruppen, wobei die Positionen der dem ersten Bild P1 entstammenden Bildpunkte wieder gestrichelt, die Positionen der dem zweiten Bild entstammenden Bildpunkte wieder punktiert und die Positionen der dem Zwischenbild entstammenden Bildpunkte wieder durchgezogen dargestellt sind. Bei dem in Figur 16 dargestellten Beispiel sind die dem Zwischenbild entstammenden dritte Bildpunkte um den zu interpolierenden Bildpunkt an der Position (a, b) herum angeordnet. Die dargestellten Bildpunktgruppen enthalten den zu interpolierenden Bildpunkt also nicht.

Nachdem zu dem gewählten Startvektor in zuvor erläuterter Weise ein Gütemaß ermittelt wurde, wird bezugnehmend auf Figur 13 in einem nächsten Verfahrensschritt 304 ein von dem Startvektor abweichender Bewegungsvektor ausgewählt, und ein Gütemaß für diesen Bewegungsvektor wird ermittelt.

Unter Berücksichtigung der Gütemaße wird der "bessere" dieser beiden Bewegungsvektoren ausgewählt (Verfahrensschritt 305). Anschließend wird unter Verwendung des (vorläufig) ausgewählten Bewegungsvektors ein Bildinformationswert zu dem zu interpolierenden Bildpunkt (a, b) interpoliert (Verfahrensschritt 306). Die Interpolation kann entsprechend Gleichung (10) derart erfolgen, dass lediglich Bildpunkte des ersten und zweiten Bildes P1, P2 ausgewählt werden. Bei der Interpolation können neben Bildpunkten im ersten und zweiten Bild P1, P2, die am Anfang und am Ende des ausgewählten Bewegungsvektors liegen, jedoch auch ein zuvor für den Bildpunkt (a, b) interpolierter Bildpunkt herangezogen werden. Die Bildinformationswerte dieser drei Bildpunkte können zur Interpolation beispielsweise einer Tiefpassfilterung unterzogen werden. Es sei darauf hingewiesen, dass unter Verwendung des ausgewählten Bewegungsvektors noch weitere Bildpunkte in zeitlich vor dem ersten Bild P1 oder zeitlich nach dem zweiten Bild P2 liegenden Bildpunkten ausgewählt und für die Interpolation herangezogen werden können.

Entsprechend der Ausführungen zu Gleichung (10) besteht auch die Möglichkeit, dass für die Interpolation eines Bildinformationswertes zu dem Bildpunkt (a, b) die Bildinformationswerte der Bildpunkte verwendet werden, die bei der Ermittlung des Gütemaßes für den ausgewählten Bewegungsvektor verwendet wurden.

In einem nächsten Verfahrensschritt 307 wird anschließend überprüft, ob eine vorgegebene Endbedingung erreicht ist. Eine solche Endbedingung liegt beispielsweise dann vor, wenn das für den zuletzt ausgewählten Bewegungsvektor ermittelte Gütemaß besser ist als ein vorgegebener Grenzwert oder wenn eine vorgegebene Anzahl von Iterationsschritten erreicht ist. Wird diese Endbedingung erreicht, so wird der zuvor ermittelte Interpolationswert als Bildinformationswert für den zu interpolierenden Bildpunkt (a, b) beibehalten. Ist diese Endbedingung nicht erreicht, so wird ein von dem zuletzt ausgewählten Bewegungsvektor vi abweichender neuer Bewegungsvektor ausgewählt und im Verfahrensschritt 304 ein Gütemaß für diesen neuen Bewegungsvektor ermittelt. Hieran schließt sich eine erneute Durchführung der bereits erläuterten Verfahrensschritte 305, 306 an.

Bei dem in Figur 13 dargestellten Verfahrensablauf erfolgt eine Interpolation unter Verwendung eines ausgewählten Bewegungsvektors noch vor der Überprüfung, ob eine Endbedingung erreicht ist. Wenn diese Endbedingung nicht erreicht ist und somit ein weiterer Bewegungsvektor durch Ermittlung seines Gütemaßes untersucht werden soll, und wenn die Gruppen von Bildpunkten, die zur Ermittlung des Gütemaßes untersucht werden, den zu interpolierenden Bildpunkt nicht enthalten (wie in dem Beispiel gemäß Figur 16 dargestellt) so kann auf die Interpolation während der einzelnen Iterationsdurchläufe verzichtet werden. Eine Interpolation unter Verwendung des schließlich ausgewählten Bewegungsvektors erfolgt dann nach Erreichen der Endbedingung nach dem Verfahrensschritt 307.

Die Ausführungen zu den Figuren 8 bis 11, die eine Interpolation unter Verwendung von Bildpunkten innerhalb desselben Bildes betreffen, sind entsprechend auf eine Interpolation unter Verwendung von Bewegungsvektoren, also eine Interpolation unter Verwendung von Bildpunkten aus zeitlich beabstandeten Bildern anwendbar. Das Ablaufdiagramm gemäß Figur 8 gilt entsprechend für Bewegungsvektoren, wenn anstelle der im Zusammenhang mit Figur 8 erläuterten Interpolationsrichtungen innerhalb eines Bildes räumliche und zeitliche Interpolationsrichtungen, sprich: Bewegungsvektoren, verwendet werden.

Entsprechend ist das modifizierte Ablaufdiagramm gemäß Figur 9 auch auf Bewegungsvektoren anwendbar. Ein während eines Durchlaufs des Iterationsverfahrens zu einem Bildpunkt ausgewählter Bewegungsvektor kann sich also aus mehreren Bewegungsvektoren räumlich benachbarter (Figur 10) oder zeitlich benachbarter (Figur 11) Bildpunkte zusammensetzen.

In den bisherigen Erläuterungen zu dem Bewegungsvektor gestützten Interpolationsverfahren wird davon ausgegangen, dass ein Bildinformationswert zu einem Bildpunkt eines Zwischenbildes zu interpolieren ist. Das Verfahren ist allerdings nicht auf eine solche Zwischenbildinterpolation beschränkt. So kann eine bewegungsvektorgestützte Bildpunktinterpolation beispielweise auch bei einer eingangs erläuterten Zwischenzeileninterpolation verwendet werden, wie nachfolgend anhand von Figur 17 erläutert wird.

Figur 17 zeigt schematisch eine Bildfolge mit drei zeitlich aufeinanderfolgenden Bildern P1, P2, P3, die in dem Beispiel zeilenverkämmte Halbbilder sind. Zur Interpolation eines Bildinformationswertes zu einem Bildpunkt (a, b) einer Zwischenzeile des zeitlich zwischen dem ersten und dritten Bild P1, P3 liegenden zweiten Bildes P2 kann das zuvor erläuterte bewegungsvektorgestützte Interpolationsverfahren verwendet werden. Bei der Ermittlung eines Gütemaßes der im Rahmen der einzelnen Iterationsschritte untersuchten Bewegungsvektoren müssen hierbei für solche Bildpunkte des zweiten Bildes P2, die Originalbildpunkte sind, keine Interpolationswerte ermittelt werden, sondern die Originalbildpunkte werden für die Ermittlung des Gütemaßes verwendet.

Eine bewegungsvektorgestützte Interpolation ist selbstverständlich nicht auf die Interpolation einer Zwischenzeile beschränkt. Eine solche bewegungsvektorgestützte Interpolation kann beispielsweise auch für eine Bildskalierung verwendet werden, wie sie anhand der Figuren 3a und 3b erläutert wurde. Anstatt - wie bei dem Verfahren gemäß der Figuren 3a und 3b - Bildpunkte zur Ermittlung eines Interpolationswertes nur innerhalb eines Bildes zu suchen, besteht unter Verwendung der erläuterten Bewegungsvektoren auch die Möglichkeit, bei einem solchen Skalierungsverfahren Bildpunkte zur Interpolation in zeitlich benachbarten Bildern zu suchen.

Auch für die Interpolation ganzer Bildblöcke, wie sie anhand der Figuren 5 bis 7 erläutert wurde, eignet sich das zuvor erläuterte bewegungsvektorgestützte Interpolationsverfahren. Anstatt Interpolationsbildpunkte nur innerhalb des Bildes zu suchen, in dem ein Bildbereich zu interpolieren ist, besteht also auch die Möglichkeit, Bildpunkte für die Interpolation in zeitlich benachbarten Bildern zu suchen.

Die anhand der Figuren 1 bis 5 erläuterten Verfahren zur Interpolation eines Bildbereiches unter Verwendung von Bildbereichen in demselben Bild lassen sich selbstverständlich auch mit den anhand der Figuren 12 bis 16 erläuterten bewegungsvektorgestützten Interpolationsverfahren kombinieren. Allgemein veranschaulicht ist ein solches Vorgehen in Figur 17, in dem schematisch eine Bildsequenz mit drei zeitlich aufeinanderfolgenden Bildern dargestellt ist. Es sei angenommen, dass ein Bildpunkt an einer Position (a, b) eines zeitlich zwischen dem ersten und dem dritten Bild P1, P3 liegenden zweiten Bildes P2 zu interpolieren ist. Für die Interpolation geeignete Bildpunkte werden hierbei sowohl innerhalb des zweiten Bildes P2 gesucht, was in Figur 17 schematisch durch einen eine Interpolationsrichtung repräsentierenden Direktor r dargestellt ist. Für die Interpolation geeignete Bildpunkte werden hierbei auch in den zeitlich benachbarten Bildern P1, P3 gesucht, was in Figur 17 schematisch durch einen Bewegungsvektor v dargestellt ist. Allgemein wird bei diesem Verfahren entweder eine Interpolationsrichtung innerhalb des Bildes P2 oder eine zeitliche und räumliche Interpolationsrichtung, das heißt ein Bewegungsvektor, mittels der zuvor ausführlich erläuterten Interpolationen ermittelt.

**Patentansprüche**

**1.** Iteratives Interpolationsverfahren zur Ermittlung eines interpolierten Bildinformationswertes in einem Bild, das eine Anzahl matrixartig angeordneter Bildbereiche aufweist, von denen wenigstens einer ein zu interpolierender Bildbereich ist, und das zeitlich zwischen einem ersten und einem zweiten Bild einer Bildfolge angeordnet ist, wobei das Verfahren zur Ermittlung eines interpolierten Bildinformationswertes die Verfahrensschritte aufweist:

a) Vorgeben eines Start-Bewegungsvektors,
b) Ermitteln eines Gütemaßes für den Start-Bewegungsvektor, das abhängig ist von Bildinformationswerten wenigstens einer Gruppe von Bildbereichen, wobei diese Gruppe von Bildbereichen wenigstens einen Bildbereich in dem ersten Bild, wenigstens einen Bildbereich in dem zweiten Bild und wenigstens einen Bildbereich in dem zu interpolierenden Bild umfasst, wobei die Position dieser Bildbereiche in den Bildern durch den Start-Bewegungsvektor vorgegeben ist,
c) Auswählen wenigstens eines von dem Start-Bewegungsvektor verschiedenen Bewegungsvektors und Ermitteln eines Gütemaßes für diesen wenigstens einen Bewegungsvektor,
d) Vergleichen der Gütemaße für den Start-Bewegungsvektor und den wenigstens einen von dem Start-Bewegungsvektor verschiedenen Bewegungsvektor, Auswählen des Start-Bewegungsvektors oder des wenigstens einen anderen Bewegungsvektor abhängig von dem Vergleichsergebnis und Ermitteln eines interpolierten Bildinformationswertes unter Verwendung von Bildbereichen, die in dem ersten und zweiten Bild an Positionen liegen, die durch den ausgewählten Bewegungsvektor vorgegeben sind oder die durch einen durch Filtern des ausgewählten Bewegungsvektors erhaltenen Bewegungsvektor vorgegeben sind,

**dadurch gekennzeichnet, dass**
ein Wiederholen der Verfahrensschritte c) und d) wenigstens einmal erfolgt, wobei bei wiederholtem Durchführen des Verfahrensschrittes c) der im jeweils vorangegangenen Verfahrensschritt d) ausgewählte Bewegungsvektor und das Gütemaß dieses ausgewählten Bewegungsvektors als Start-Bewegungsvektor und als Gütemaß des Start-Bewegungsvektors verwendet werden.

**2.** Verfahren nach Anspruch 1, bei dem die Verfahrensschritte c) und d) so oft wiederholt werden, bis eine vorgegebene Endbedingung erreicht ist.

**3.** Verfahren nach Anspruch 2, bei dem die Endbedingung erreicht ist, wenn eine vorgegebene Anzahl an Iterationsschritten erreicht ist.

**4.** Verfahren nach Anspruch 2, bei dem die Endbedingung erreicht ist, wenn das der Interpolationsrichtung in Schritt d) zugeordnete Gütemaß eine vorgegebene Bedingung erfüllt.

**5.** Verfahren nach einem der vorangehenden Ansprüche, bei dem mit jeder Durchführung des Verfahrensschrittes c) ein neuer von der Start-Interpolationsrichtung verschiedener Bewegungsvektor ausgewählt wird.

**6.** Verfahren nach einem der vorangehenden Ansprüche, bei dem die wenigstens eine der Gruppen von Bildbereichen, die bei der Ermittlung eines Gütemaßes herangezogen werden, den zu interpolierenden Bildbereich umfasst.

**7.** Verfahren nach Anspruch 6, bei dem vor einer ersten Durchführung des Verfahrensschrittes b) dem zu interpolierenden Bildbereich ein Start-Interpolationswert zugewiesen wird, der durch Filterung von Bildinformationswerten einer Gruppe von Bildbereichen erzeugt wird, die an durch den Start-Bewegungsvektor vorgegebenen Positionen in dem ersten und zweiten Bild angeordnet sind.

**8.** Verfahren nach einem der vorangehenden Ansprüche,
bei dem die wenigstens eine Gruppe von Bildbereichen zur Ermittlung des Gütemaßes wenigstens einen weiteren zu interpolierenden Bildbereich aufweist,
und bei dem vor einer ersten Durchführung des Verfahrensschrittes b) für den zu interpolierenden Bildbereich der Verfahrensschritt a) für den wenigstens einen weiteren zu interpolierenden Bildbereich durchgeführt wird und bei dem vor jeder Wiederholung der Verfahrensschritte c) und d) für den zu interpolierenden Bildbereich die Verfahrensschritte c) und d) für den wenigstens einen weiteren zu interpolierenden Bildbereich durchgeführt werden.

**9.** Verfahren nach Anspruch 8, bei dem die Verfahrensschritte c) und d) für den wenigstens einen weiteren zu interpolierenden Bildbereich nur durchgeführt werden, wenn für diesen weiteren zu interpolierenden Bildbereich die Endbedingung nicht erreicht ist.

**10.** Verfahren nach einem der vorangehenden Ansprüche, bei dem die Ermittlung des Gütemaßes für einen Bewegungsvektor unter Verwendung einer Gruppe von Bildbereichen folgende Verfahrensschritte umfasst:

- Anwenden einer Hochpassfilterung auf die Bildinformationswerte der Bildbereiche dieser wenigstens einen Gruppe, um einen Hochpassanteil zu erzeugen,
- Ermitteln des Gütemaßes als Funktion des wenigstens einen Hochpassanteils.

**11.** Verfahren nach Anspruch 10, bei dem wenigstens zwei Gruppen von Bildbereichen zur Ermittlung eines Gütemaßes verwendet werden.

**12.** Verfahren nach einem der vorangehenden Ansprüche, bei dem die Verfahrensschritte a) bis d) parallel für mehrere benachbarte Bildbereiche durchgeführt werden, und bei dem der gefilterte Bewegungsvektor zu einem ersten Bildbereich in Verfahrensschritt d) durch Filtern des Bewegungsvektors des ersten Bildbereiches und wenigstens eines benachbart zu dem ersten Bildbereich angeordneten Bildbereiches erhalten wird.

**13.** Verfahren nach einem der vorangehenden Ansprüche, bei dem die Bildbereiche, die für die Erzeugung eines interpolierten Bildinformationswertes verwendet werden, nur Originalbildbereiche sind.

**14.** Verfahren nach einem der vorangehenden Ansprüche, bei dem die Bildbereiche Bildpunkte sind und bei dem die Bildinformationswerte Luminanzwerte oder Chrominanzwerte sind.

## Claims

**1.** An iterative interpolation method for determining an interpolated video information value in an image that includes a number of image regions arrayed in matrix fashion, at least one of which is an image region to be interpolated, and that is disposed temporally between a first image and a second image of an image sequence, the method comprising:

a) specifying a starting motion vector;
b) determining for the starting motion vector a figure of merit, which depends on video information values of at least one group of image regions, this group of image regions comprising at least one image region in the first image, at least one image region in the second image and at least one image region in the image to be interpolated, the position of these image regions in the images being specified by the starting motion vector;
c) selecting at least one motion vector distinct from the starting motion vector and determining a figure of merit for this at least one motion vector;
d) comparing the figures of merit for the starting motion vector and the at least one motion vector distinct from the starting motion vector, selecting the starting motion vector or the at least one other motion vector in dependence on the comparison result and determining an interpolated video information value using image regions that lie in the first and second images at positions specified by the selected motion vector or specified by a motion vector obtained by filtering the selected motion vector, **characterized in that**
steps c) and d) are repeated at least once, the motion vector selected in the preceding step d) being employed as the starting motion vector, and the figure of merit of this selected motion vector as the figure of merit of the starting motion vector, when step c) is next performed.

**2.** The method of claim 1, wherein steps c) and d) are repeated until a specified end condition has been attained.

**3.** The method of claim 2, wherein the end condition has been attained when a specified number of iterations has been reached.

**4.** The method of claim 2, wherein the end condition has been attained when the figure of merit associated with the interpolation direction in step d) satisfies a specified condition.

**5.** The method of any of the preceding claims, wherein a new motion vector distinct from the starting interpolation direction is selected every time step c) is performed.

**6.** The method of any of the preceding claims, wherein the at least one of the groups of image regions used in order to determine a figure of merit comprises the image region to be interpolated.

7. The method of claim 6, wherein, before a first performance of step b), there is associated with the image region to be interpolated a starting interpolation value, which is generated by filtering of video information values of a group of image regions disposed in the first and second images at positions specified by the starting motion vector.

8. The method of any of the preceding claims, wherein the at least one group of image regions for determining the figure of merit exhibits at least one further image region to be interpolated and wherein, before a first performance of step b) for the image region to be interpolated, step a) is performed for the at least one further image region to be interpolated, and wherein, before every repetition of steps c) and d) for the image region to be interpolated, steps c) and d) are performed for the at least one further image region to be interpolated.

9. The method of claim 8, wherein steps c) and d) are performed for the at least one further image region to be interpolated only if the end condition for this further image region to be interpolated has not been attained.

10. The method of any of the preceding claims, wherein the determination of the figure of merit for a motion vector with the use of a group of image regions comprises:

- high-pass filtering of the video information values of the image regions of this at least one group in order to generate a high-pass component; and
- determining the figure of merit as a function of the at least one high-pass component.

11. The method of claim 10, wherein at least two groups of image regions are employed in order to determine a figure of merit.

12. The method of any of the preceding claims, wherein steps a) to d) are performed in parallel for a plurality of adjacent image regions and wherein the filtered motion vector for a first image region is obtained in step d) by filtering of the motion vector of the first image region and of at least one image region lying adjacent the first image region.

13. The method of any of the preceding claims, wherein the only image regions employed in order to generate an interpolated video information value are original image regions.

14. The method of any of the preceding claims, wherein the image regions are pixels and wherein the video information values are luminance values or chrominance values.

**Revendications**

1. Procédé itératif d'interpolation destiné à déterminer une valeur d'information d'image interpolée dans une image qui comporte un nombre de zones d'image disposées à la manière d'une matrice, dont au moins une est une zone d'image à interpoler, et qui est disposée dans le temps entre une première et une deuxième image d'une séquence d'images, le procédé destiné à déterminer une valeur d'information d'image interpolée comportant les étapes de procédé :

a) prédéfinition d'un vecteur de mouvement de départ,
b) détermination d'un degré de qualité pour le vecteur de mouvement de départ qui est dépendant de valeurs d'information d'image d'au moins un groupe de zones d'image, ledit groupe de zones d'image incluant au moins une zone d'image dans la première image, au moins une zone d'image dans la deuxième image, et au moins une zone d'image dans l'image à interpoler, la position desdites zones d'image dans les images étant prédéfinie par le vecteur de mouvement de départ,
c) sélection d'au moins un vecteur de mouvement différent du vecteur de mouvement de départ et la détermination d'un degré de qualité pour ledit au moins un vecteur de mouvement,
d) comparaison des degrés de qualité pour le vecteur de mouvement de départ et ledit au moins un vecteur de mouvement différent du vecteur de mouvement de départ, sélection du vecteur de mouvement de départ ou dudit au moins un autre vecteur de mouvement en fonction du résultat de la comparaison, et détermination d'une valeur d'information d'image interpolée moyennant des zones d'image situées dans des positions dans la première et la deuxième image qui sont prédéfinies par le vecteur de mouvement sélectionné ou par un vecteur de mouvement obtenu par filtrage du vecteur de mouvement sélectionné,

**caractérisé en ce que**

une répétition des étapes de procédé c) et d) a lieu au moins une fois, où, en cas de mise en oeuvre répétée de l'étape de procédé c), le vecteur de mouvement sélectionné pendant l'étape de procédé d) précédente respective et le degré de qualité dudit vecteur de mouvement sélectionné sont utilisés comme vecteur de mouvement de départ et comme degré de qualité du vecteur de mouvement de départ.

**2.** Procédé selon la revendication 1, dans lequel les étapes de procédé c) et d) sont répétées un nombre de fois jusqu'à ce qu'une condition finale prédéfinie soit atteinte.

**3.** Procédé selon la revendication 2, dans lequel la condition finale est atteinte quand un nombre prédéfini d'étapes d'itération est atteint.

**4.** Procédé selon la revendication 2, dans lequel la condition finale est atteinte quand le degré de qualité associé à la direction d'interpolation dans l'étape d) remplit une condition prédéfinie.

**5.** Procédé selon l'une des revendications précédentes, dans lequel à chaque mise en oeuvre de l'étape de procédé c), un nouveau vecteur de mouvement différent de la direction d'interpolation de départ est sélectionné.

**6.** Procédé selon l'une des revendications précédentes, dans lequel ledit au moins un des groupes de zones d'image utilisés pour déterminer un degré de qualité inclut la zone d'image à interpoler.

**7.** Procédé selon la revendication 6, dans lequel, avant une première mise en oeuvre de l'étape de procédé b), une valeur d'interpolation de départ qui est générée par filtrage de valeurs d'information d'image d'un groupe de zones d'image disposées dans des positions prédéfinies par le vecteur de mouvement de départ dans la première et la deuxième image, est assignée à la zone d'image à interpoler.

**8.** Procédé selon l'une des revendications précédentes, dans lequel ledit au moins un groupe de zones d'image destinées à déterminer le degré de qualité comporte au moins une autre zone d'image à interpoler, et dans lequel, avant une première mise en oeuvre de l'étape de procédé b) pour la zone d'image à interpoler, l'étape de procédé a) est mise en oeuvre pour ladite au moins une autre zone d'image à interpoler, et dans lequel, avant chaque répétition des étapes de procédé c) et d) pour la zone d'image à interpoler, les étapes de procédé c) et d) sont mises en oeuvre pour ladite au moins une autre zone d'image à interpoler.

**9.** Procédé selon la revendication 8, dans lequel les étapes de procédé c) et d) pour ladite au moins une autre zone d'image à interpoler ne sont mises en oeuvre que dans le cas où la condition finale n'est pas atteinte pour ladite autre zone d'image à interpoler.

**10.** Procédé selon l'une des revendications précédentes, dans lequel la détermination du degré de qualité pour un vecteur de mouvement moyennant un groupe de zones d'image comporte les étapes de procédé suivantes :

- application d'un filtrage passe-haut aux valeurs d'information d'image des zones d'image dudit au moins un groupe afin de générer une fraction passe-haut,
- détermination du degré de qualité comme fonction de ladite au moins une fraction passe-haut.

**11.** Procédé selon la revendication 10, dans lequel au moins deux groupes de zones d'image sont utilisés pour déterminer un degré de qualité.

**12.** Procédé selon l'une des revendications précédentes, dans lequel les étapes de procédé a) à d) sont mises en oeuvre en parallèle pour une pluralité de zones d'image adjacentes, et dans lequel le vecteur de mouvement filtré pour une première zone d'image est obtenu dans l'étape d) par filtrage du vecteur de mouvement de la première zone d'image et d'au moins une zone d'image disposée de façon adjacente à la première zone d'image.

**13.** Procédé selon l'une des revendications précédentes, dans lequel les zones d'image utilisées pour générer une valeur d'information d'image interpolée ne sont que des zones d'image originale.

**14.** Procédé selon l'une des revendications précédentes, dans lequel les zones d'image sont des points d'image et dans lequel les valeurs d'information d'image sont des valeurs de luminance ou de chrominance.

FIG 1a

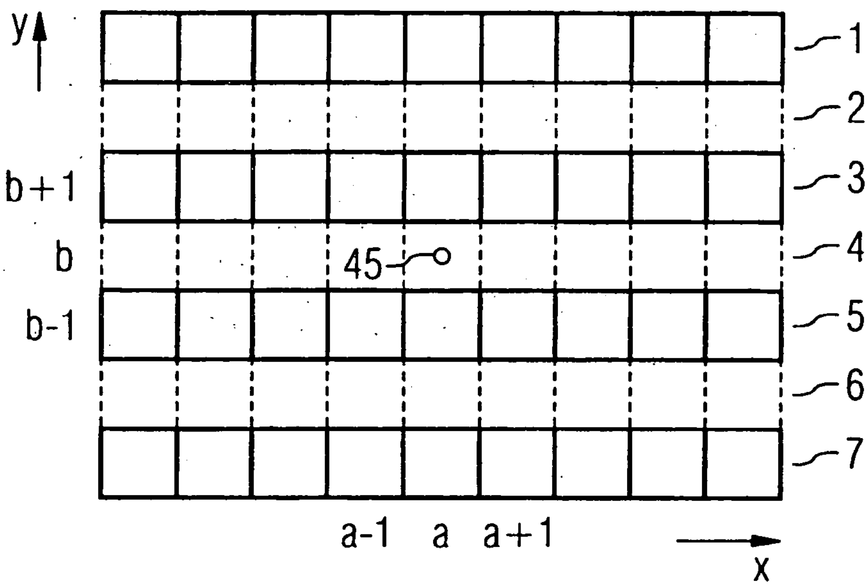
y
b+1
b
b-1
45
1
2
3
4
5
6
7
a-1
a
a+1
x

FIG 1b

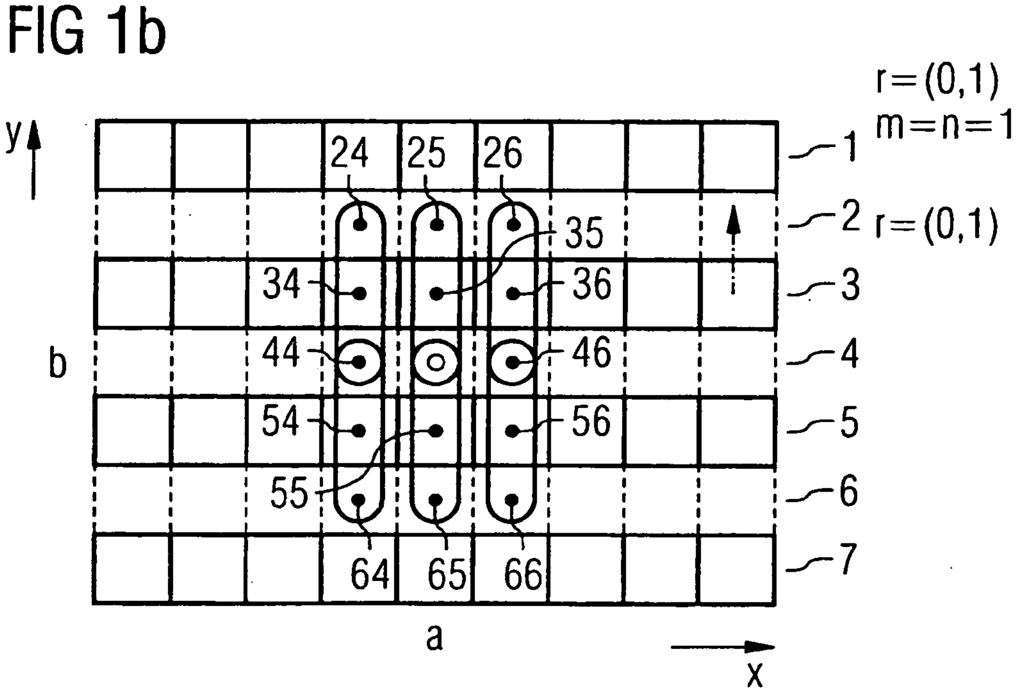
r=(0,1)
m=n=1
r=(0,1)
y
b
24
25
26
35
34
36
44
46
54
56
55
64
65
66
1
2
3
4
5
6
7
a
x

FIG 1c

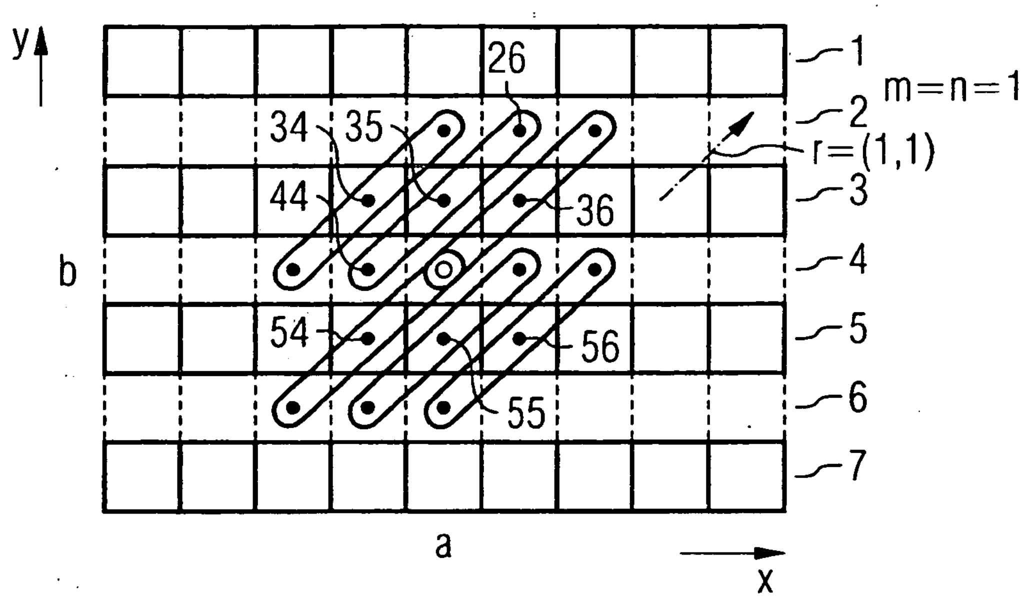


FIG 1d

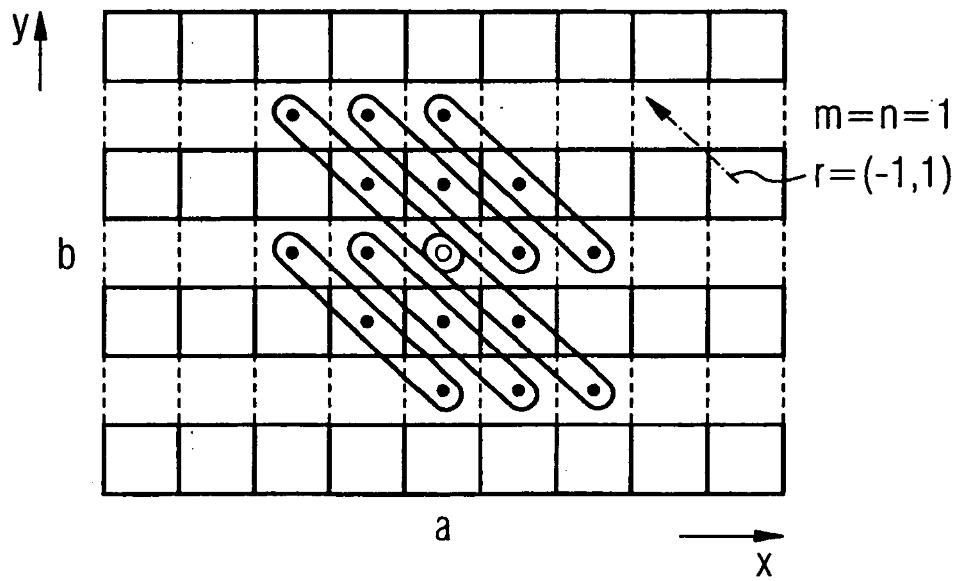

FIG 1e

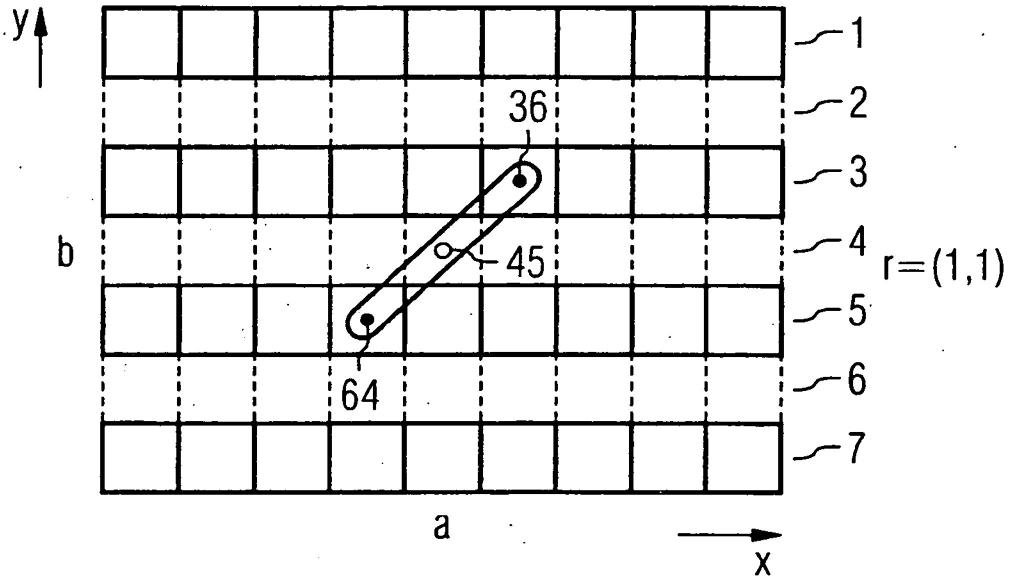


FIG 1f

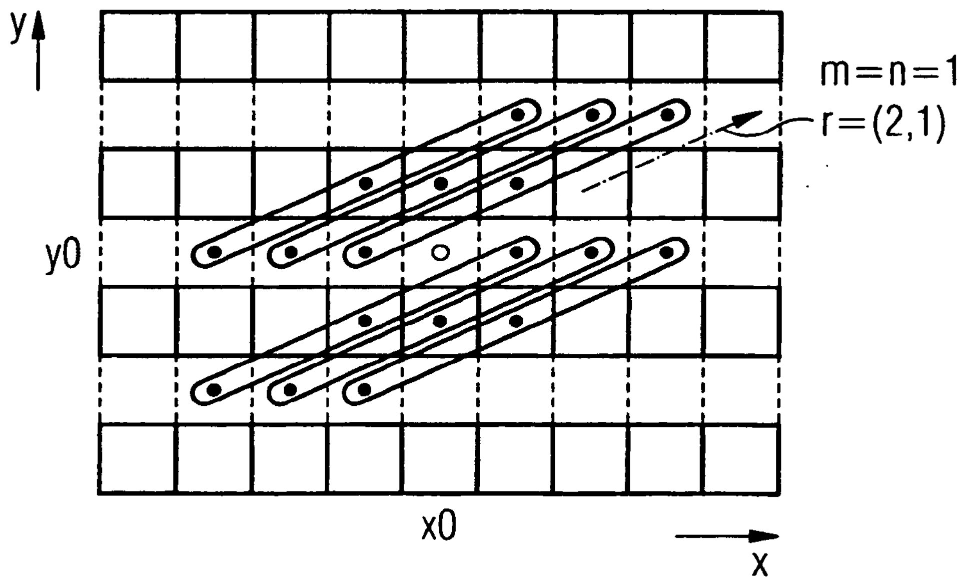

FIG 1g

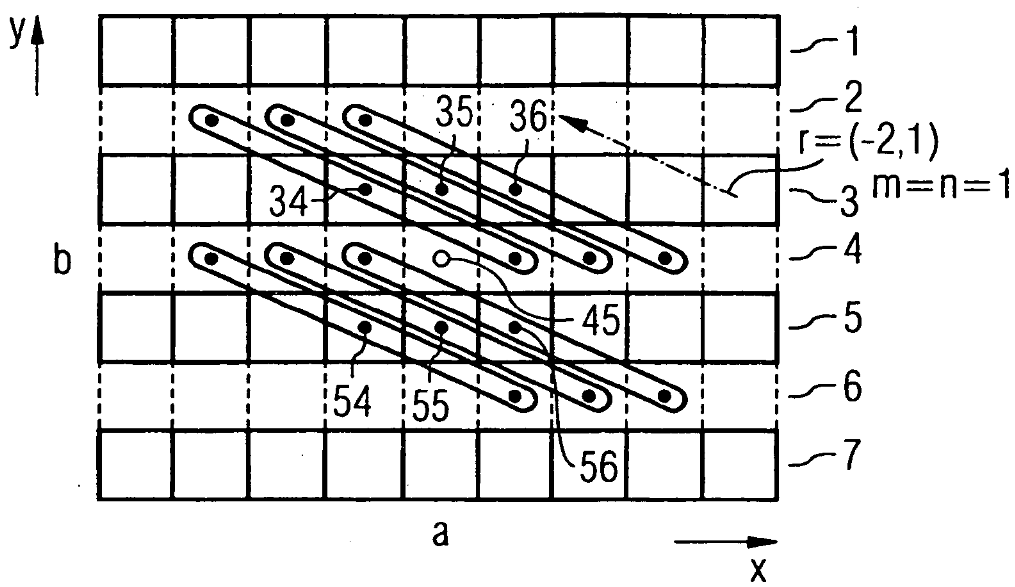

FIG 2

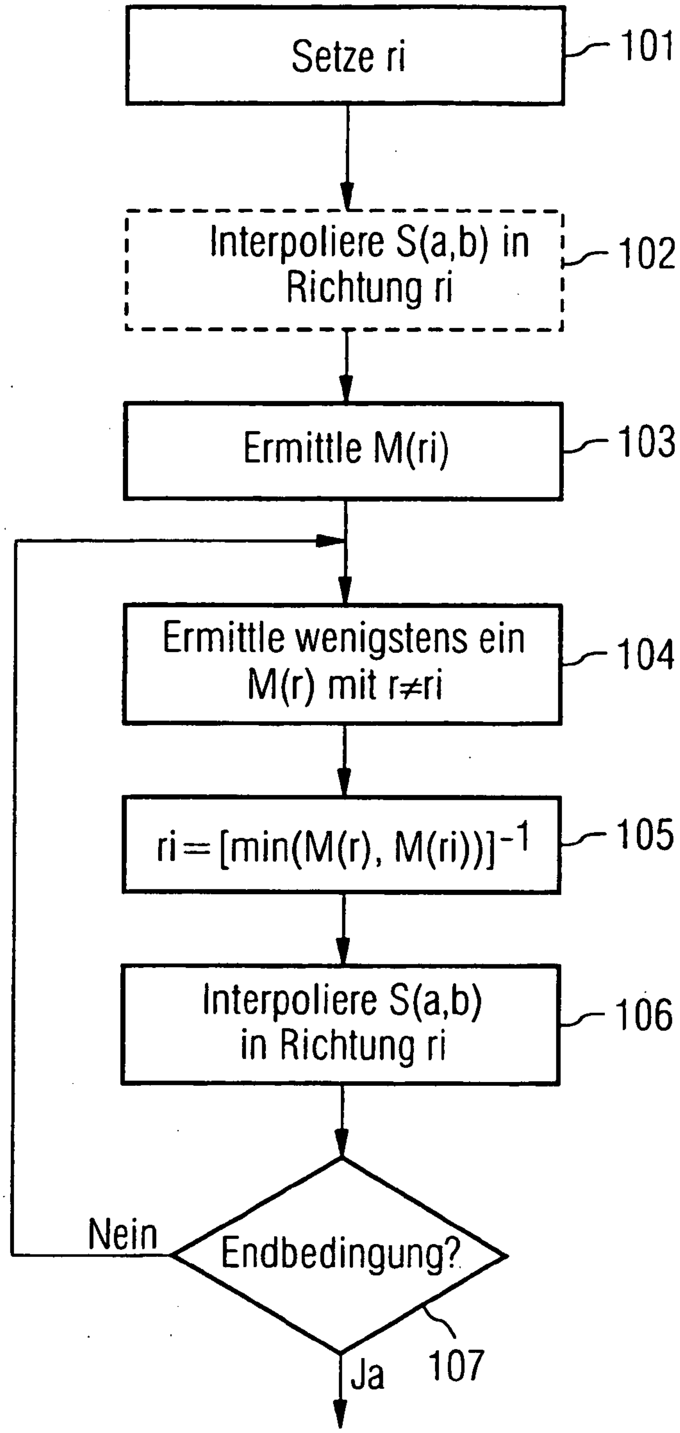
Setze ri
101
Interpoliere S(a,b) in Richtung ri
102
Ermittle M(ri)
103
Ermittle wenigstens ein M(r) mit r≠ri
104
ri = [min(M(r), M(ri))]^-1
105
Interpoliere S(a,b) in Richtung ri
106
Nein
Endbedingung?
107
Ja

FIG 3a

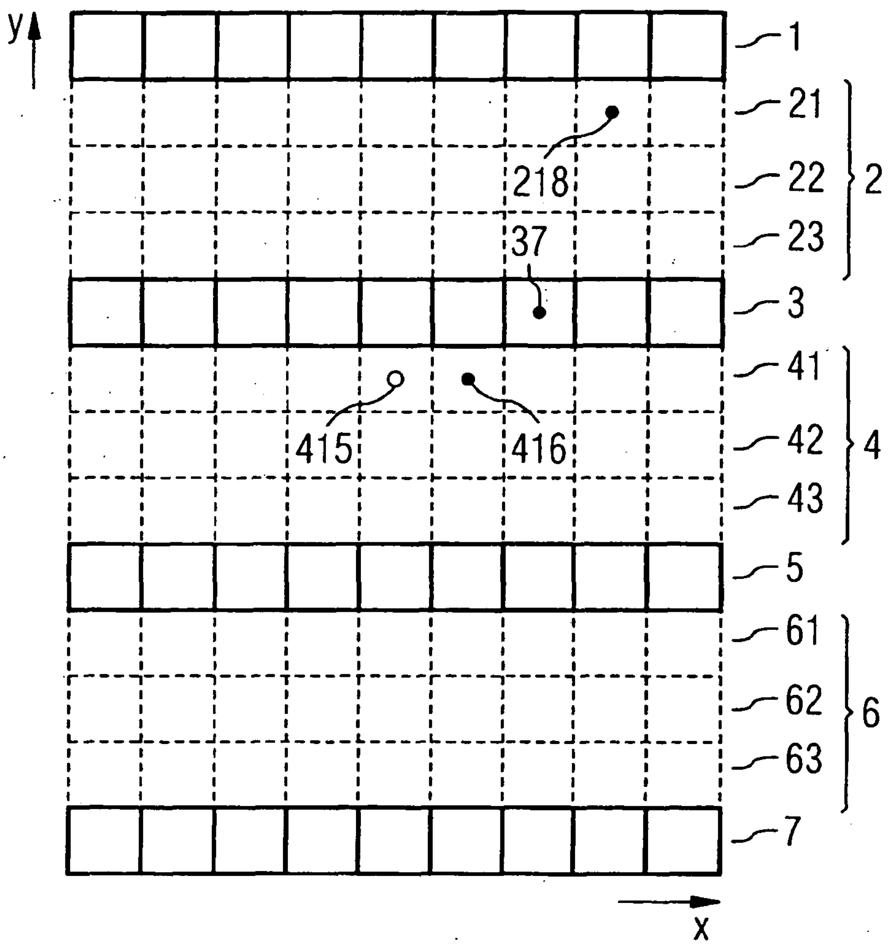
y
x
1
21
22
23
2
3
41
42
43
4
5
61
62
63
6
7
218
37
415
416

FIG 3b

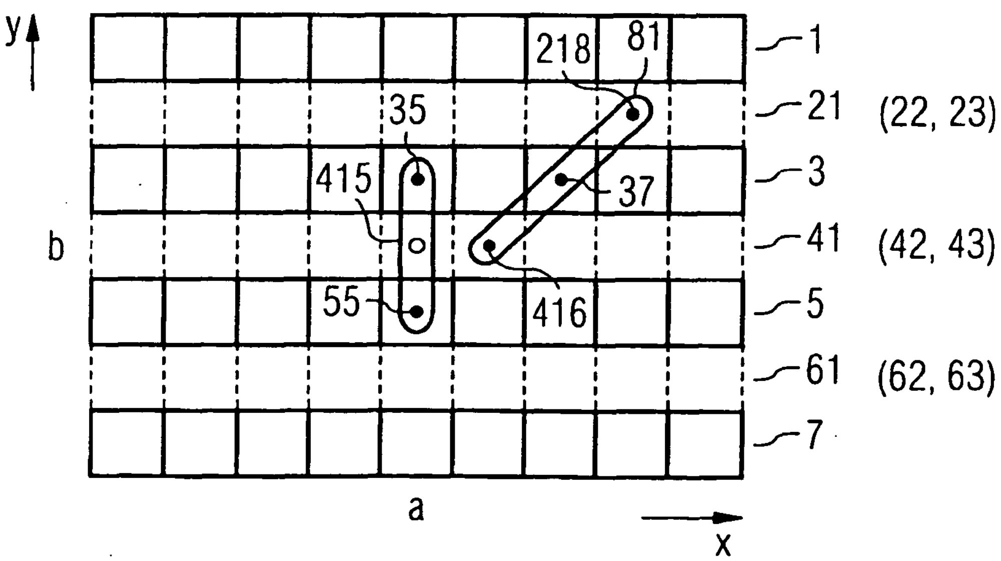
y
x
a
b
1
21
(22, 23)
3
41
(42, 43)
5
61
(62, 63)
7
218
81
35
415
37
55
416

FIG 4a

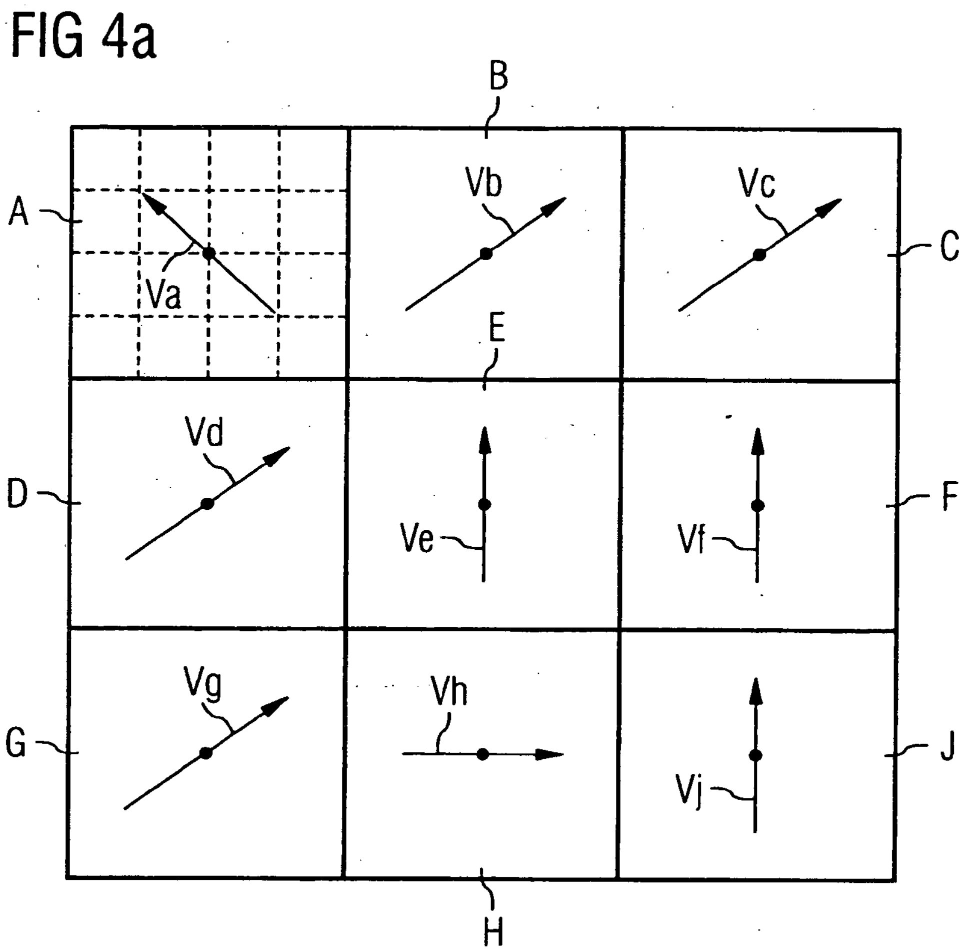

FIG 4b

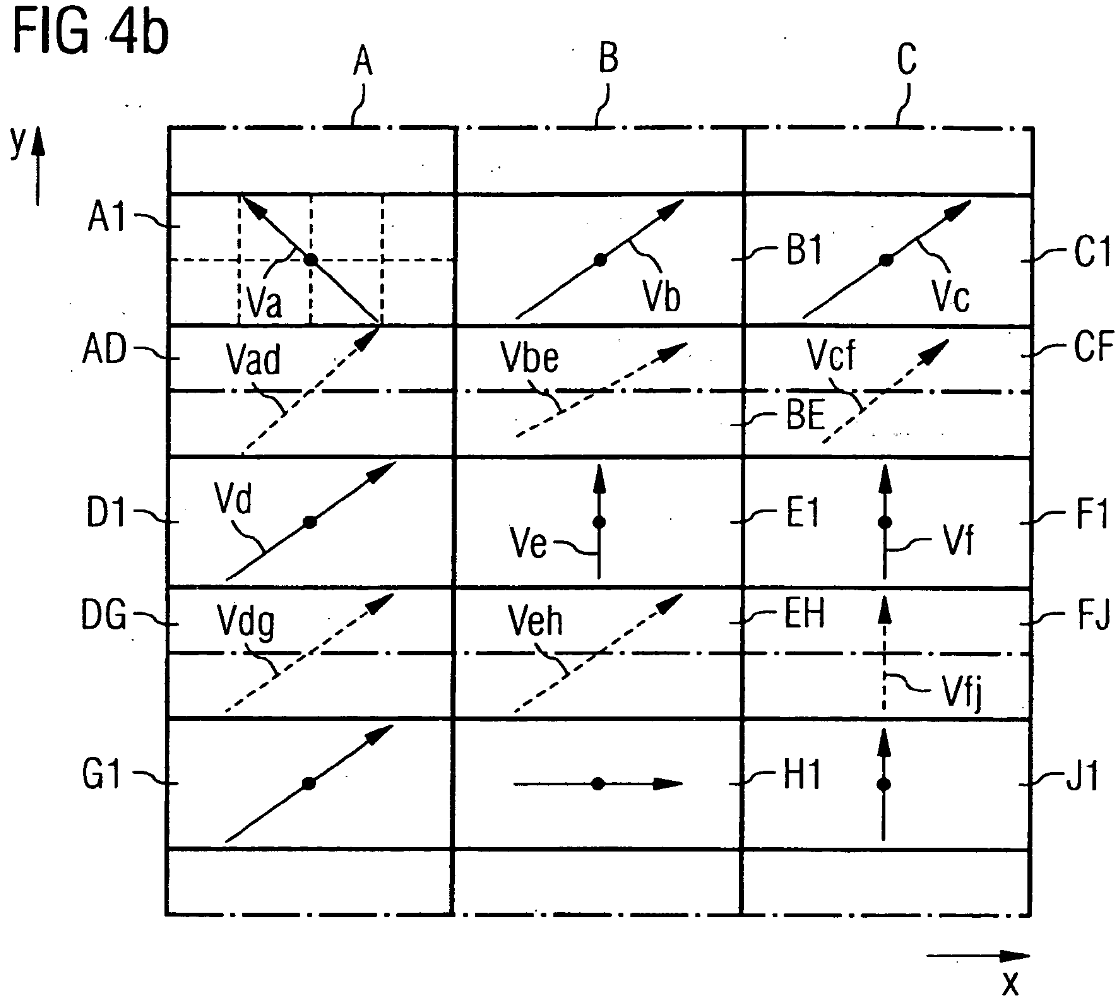
A
B
C
y
x
A1
B1
C1
Va
Vb
Vc
AD
CF
Vad
Vbe
Vcf
BE
D1
E1
F1
Vd
Ve
Vf
DG
EH
FJ
Vdg
Veh
Vfj
G1
H1
J1

FIG 4c

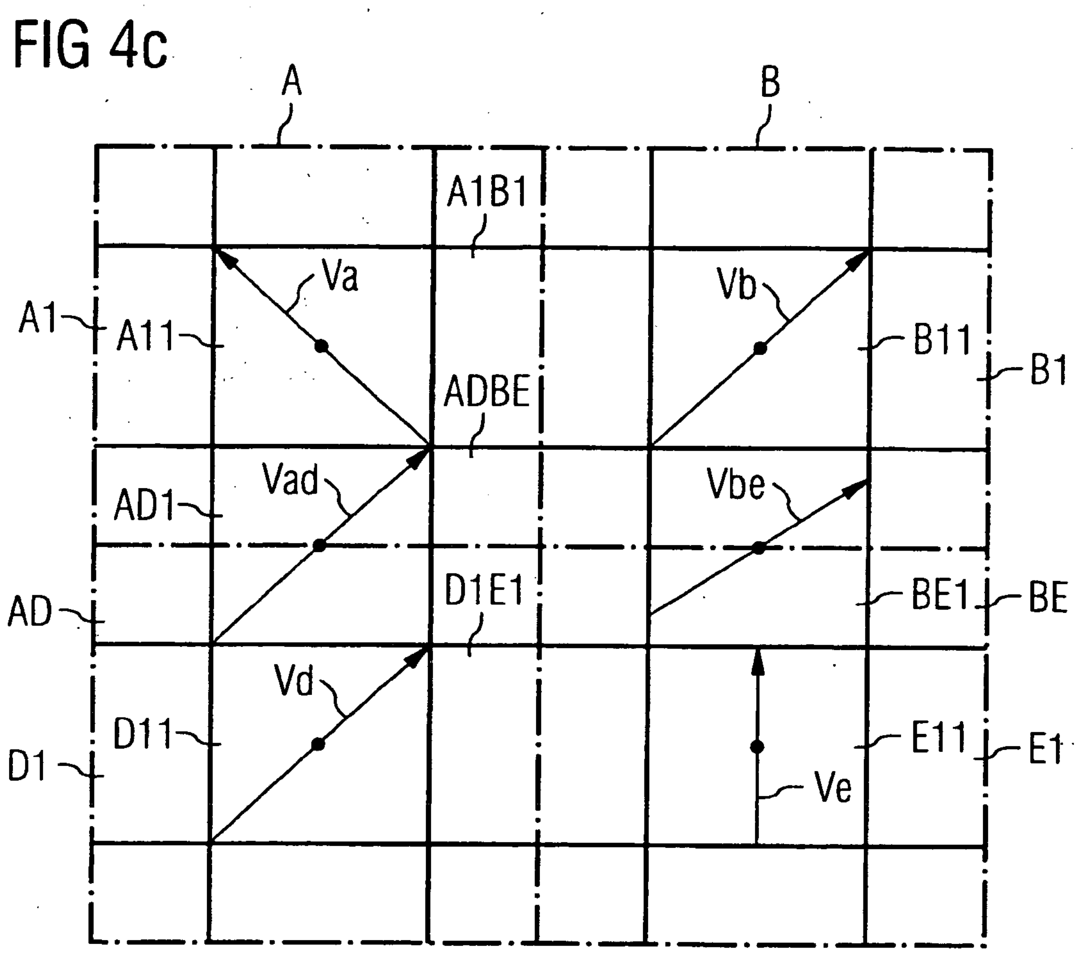
A
B
A1B1
Va
Vb
A1
A11
B11
B1
ADBE
Vad
Vbe
AD1
AD
D1E1
BE1
BE
Vd
D11
E11
E1
D1
Ve

FIG 5a

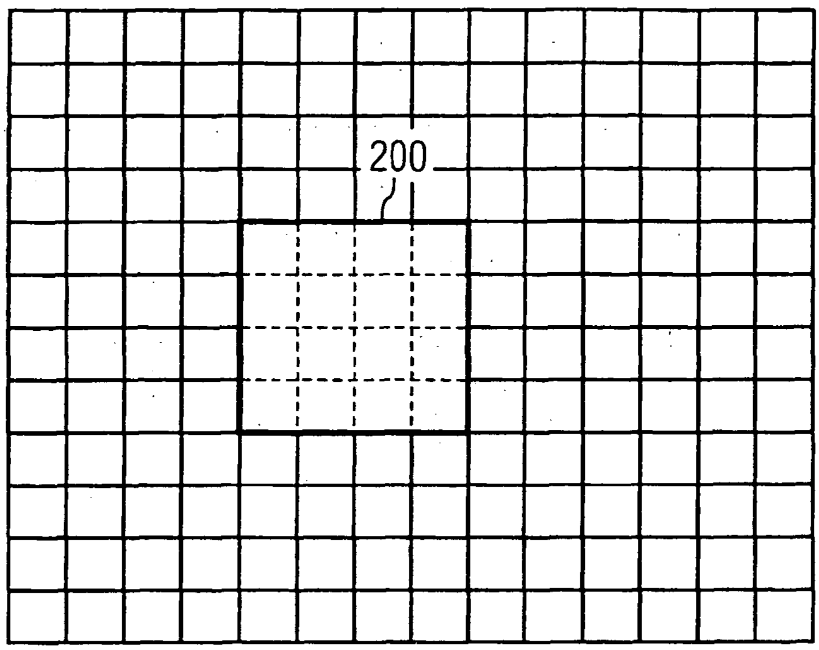


FIG 5b

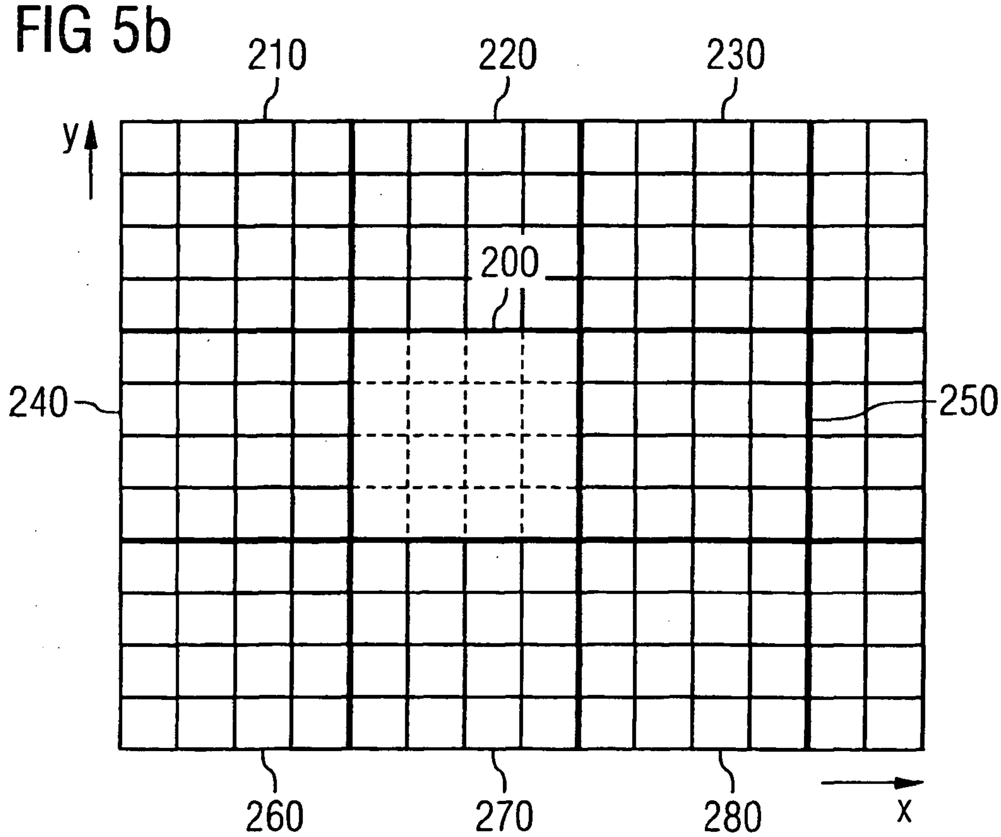

FIG 6a

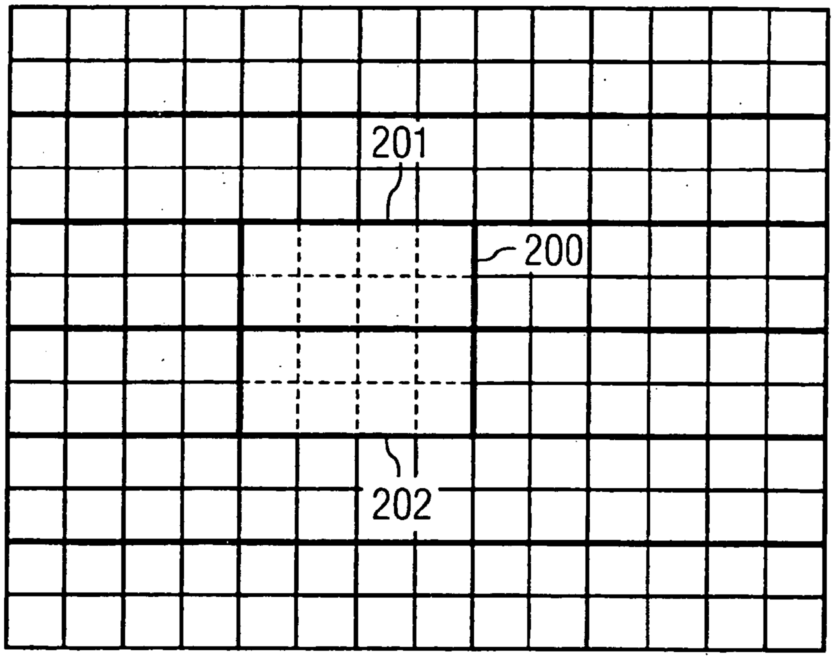


FIG 6b

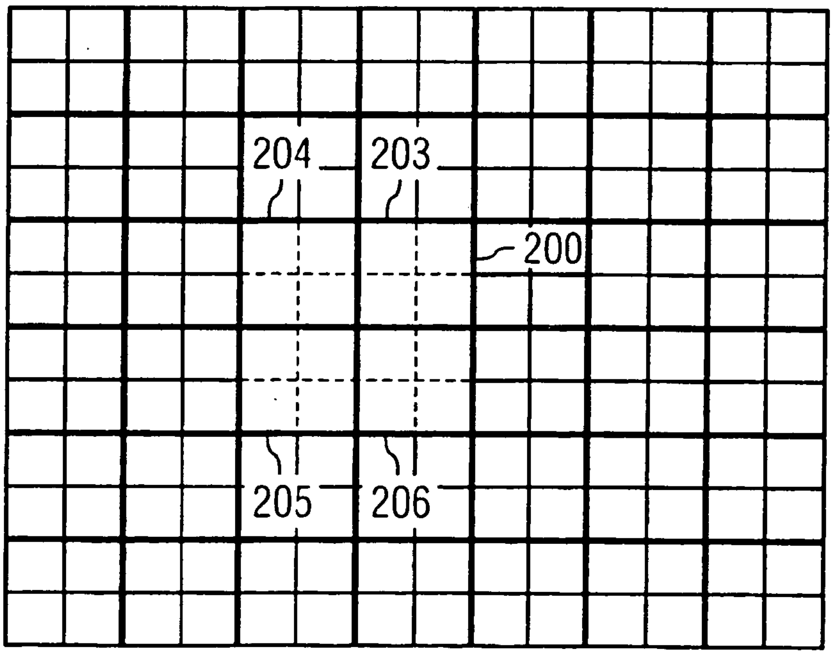

FIG 6c

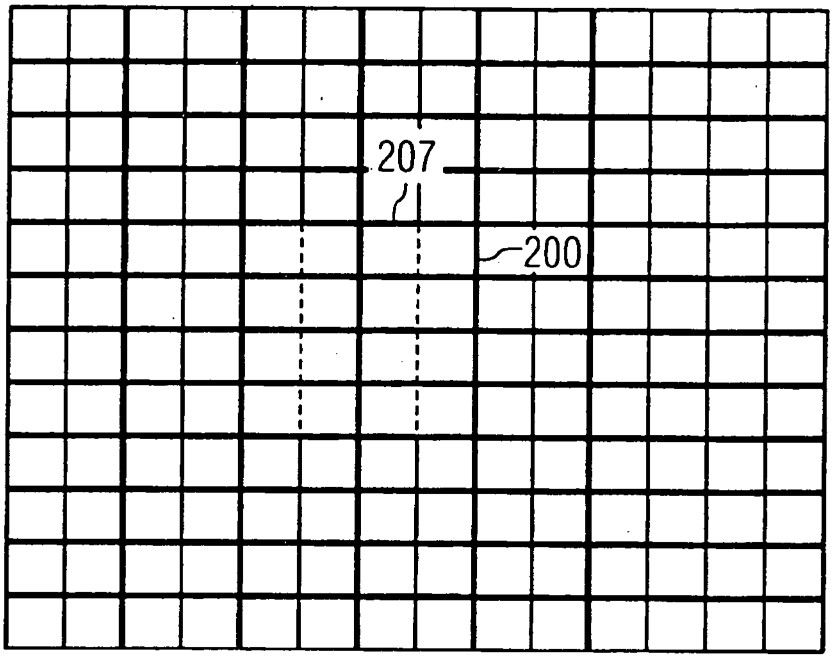


FIG 7a

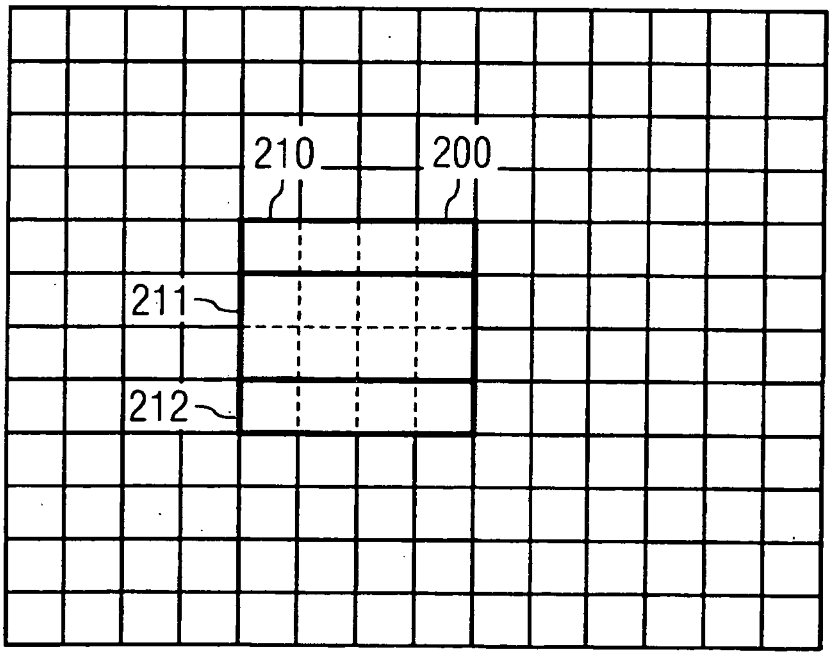

FIG 7b

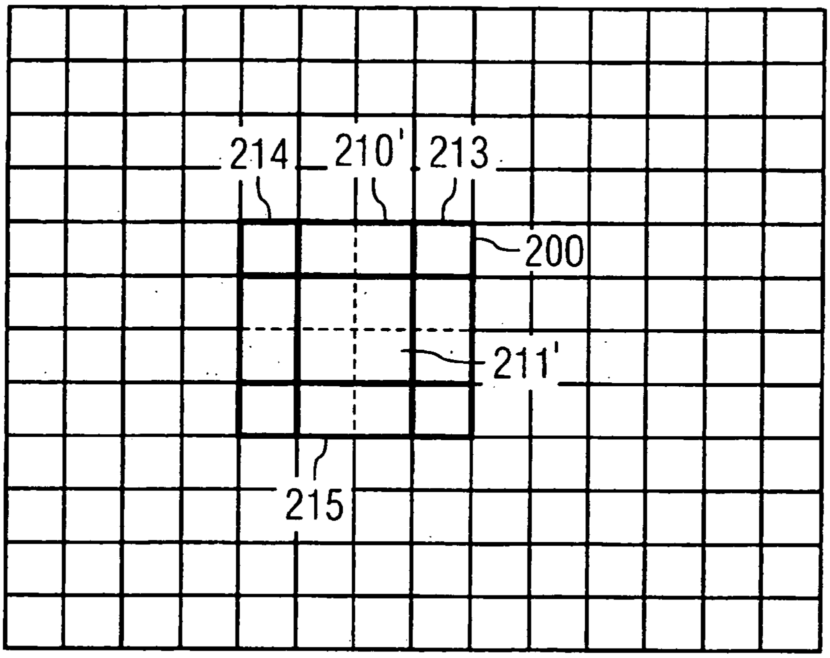


FIG 7c

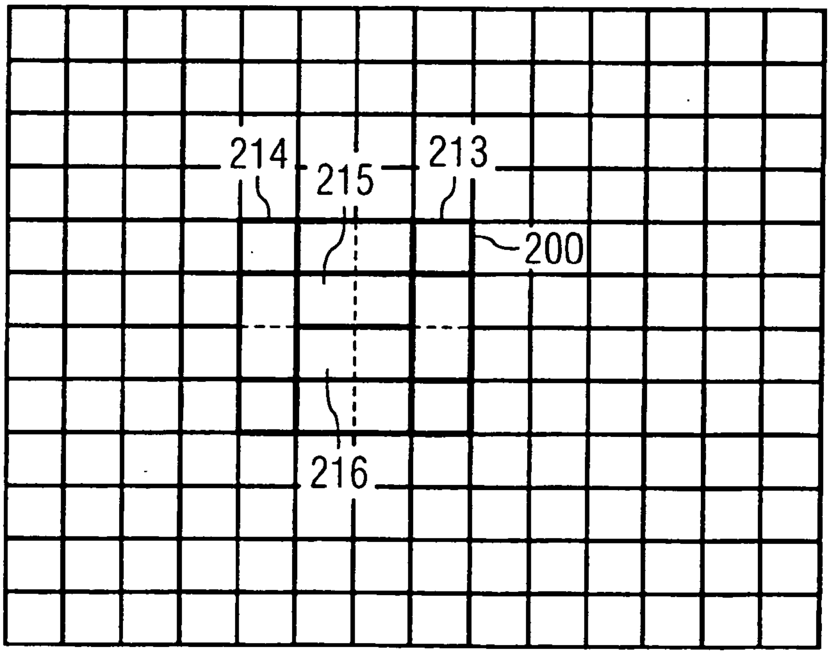

FIG 7d

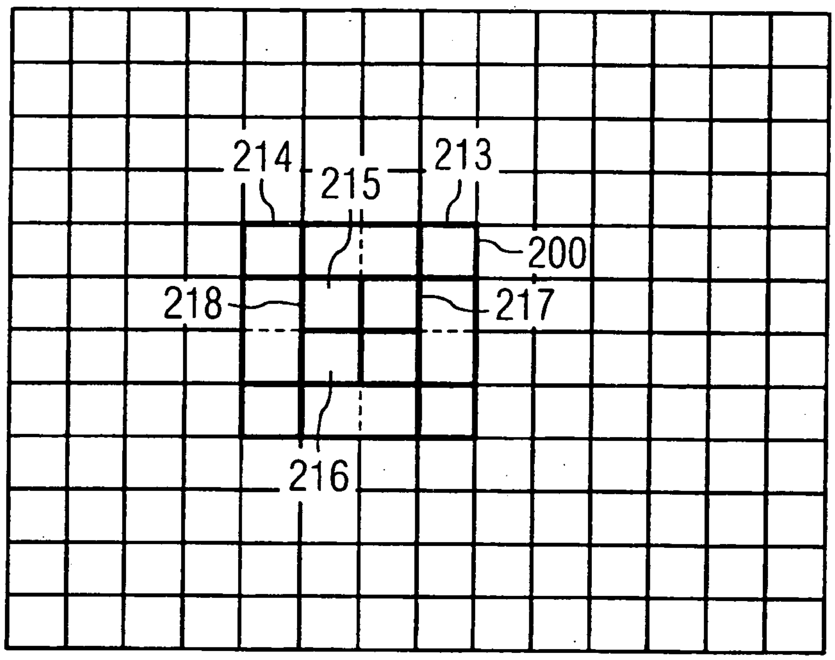

FIG 8

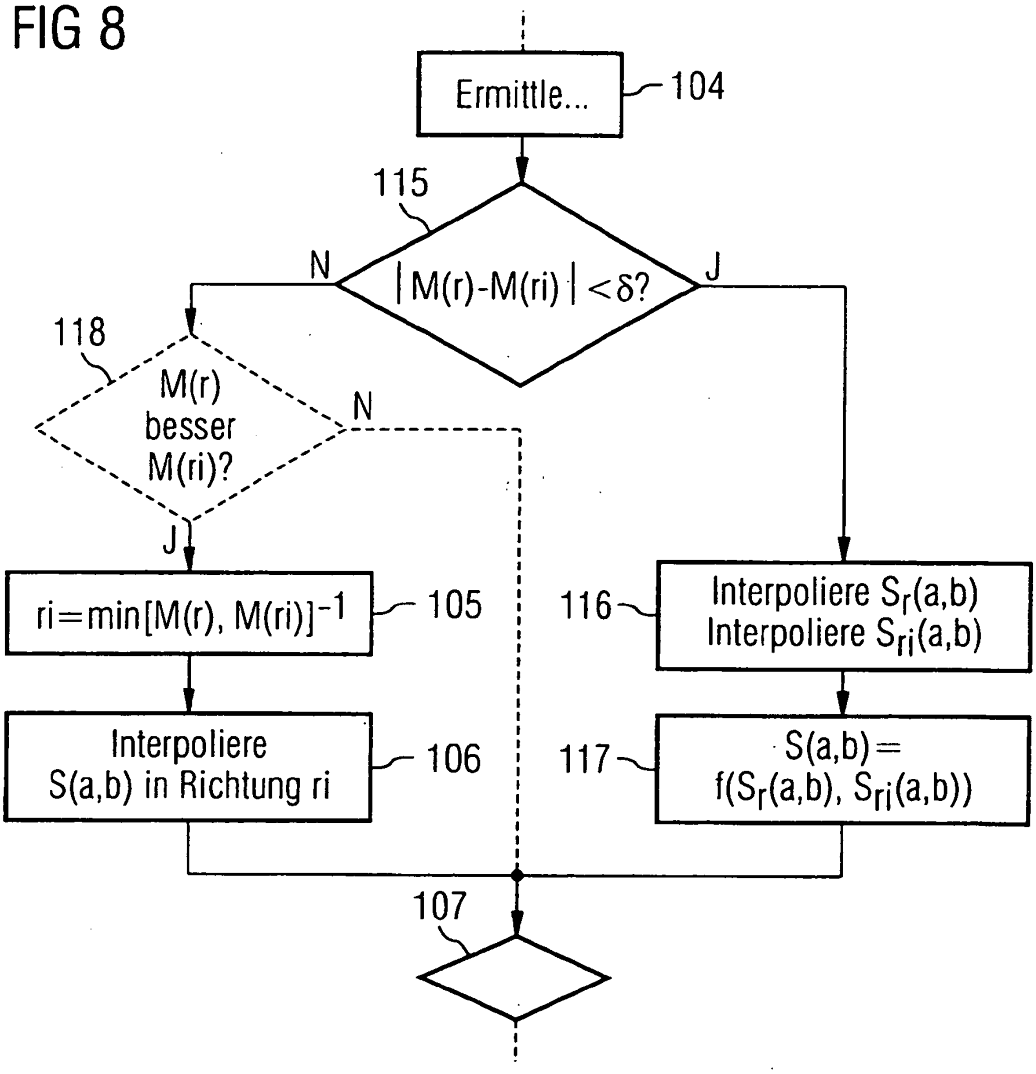
Ermittle...
104
115
|M(r)-M(ri)| <δ?
N
J
118
M(r) besser M(ri)?
N
J
ri=min[M(r), M(ri)]^-1
105
Interpoliere S(a,b) in Richtung ri
106
116
Interpoliere Sr(a,b)
Interpoliere Sri(a,b)
117
S(a,b)= f(Sr(a,b), Sri(a,b))
107

FIG 9

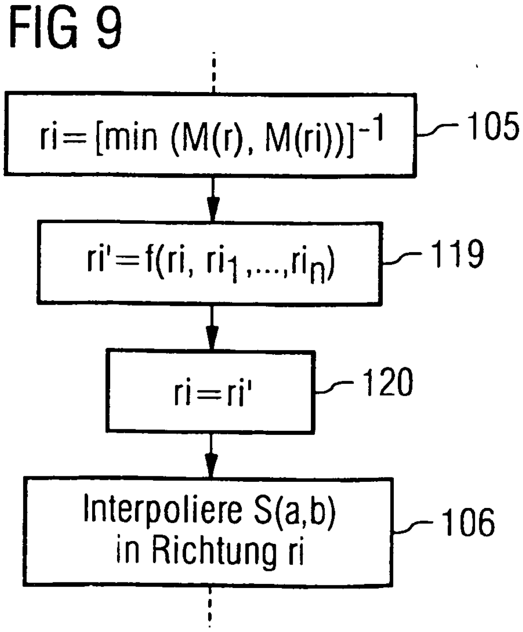
ri=[min (M(r), M(ri))]^-1
105
ri'=f(ri, ri1,...,rin)
119
ri=ri'
120
Interpoliere S(a,b) in Richtung ri
106

FIG 10

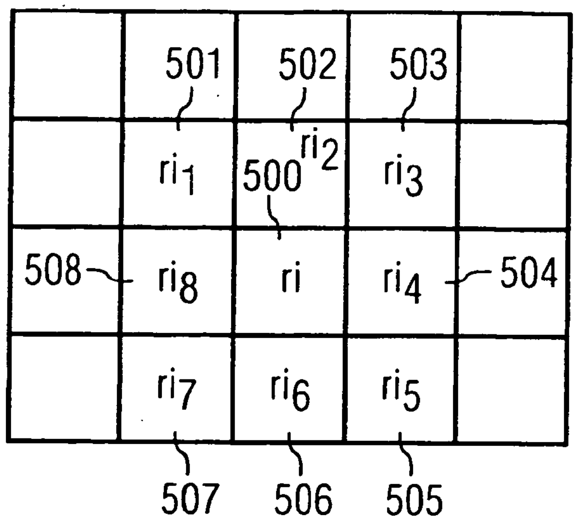
501
502
503
$ri_1$
500
$ri_2$
$ri_3$
508
$ri_8$
ri
$ri_4$
504
$ri_7$
$ri_6$
$ri_5$
507
506
505

FIG 11

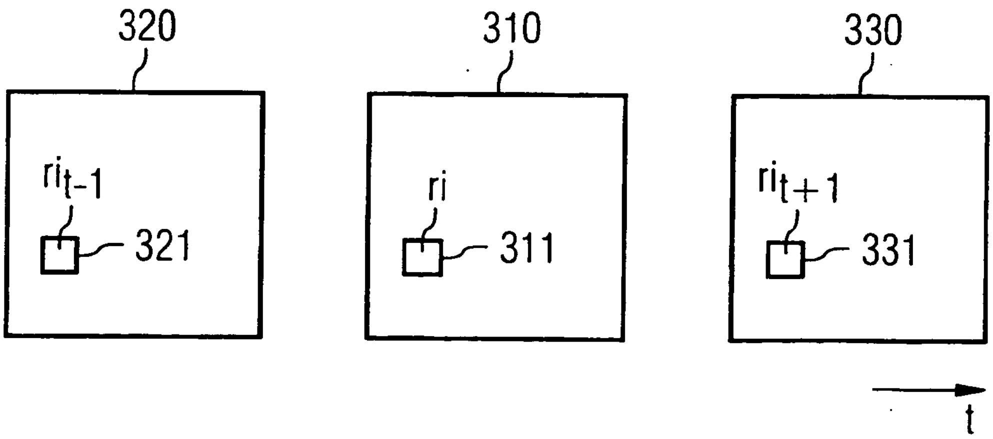
320
310
330
$ri_{t-1}$
321
ri
311
$ri_{t+1}$
331
t

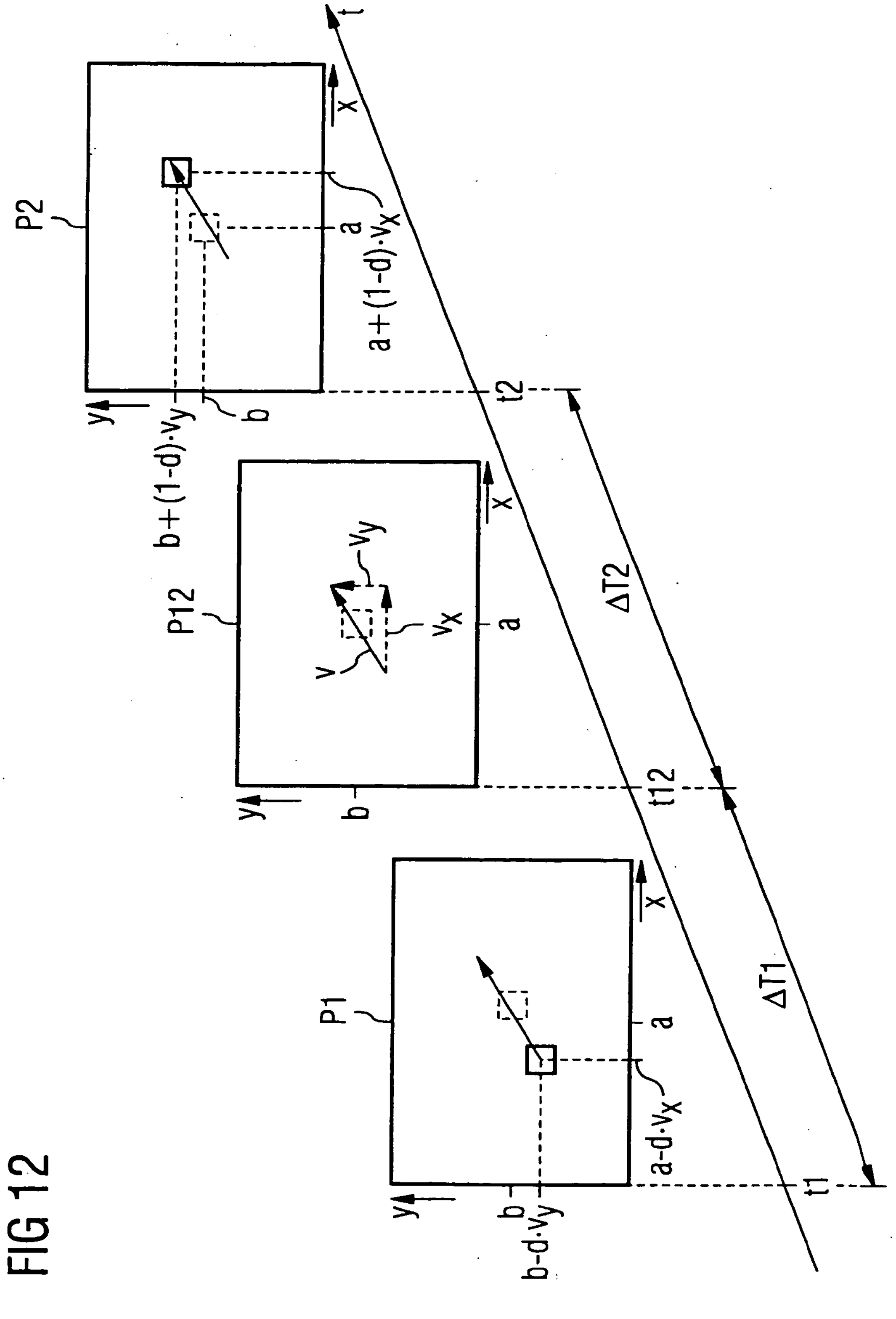


FIG 12

FIG 13

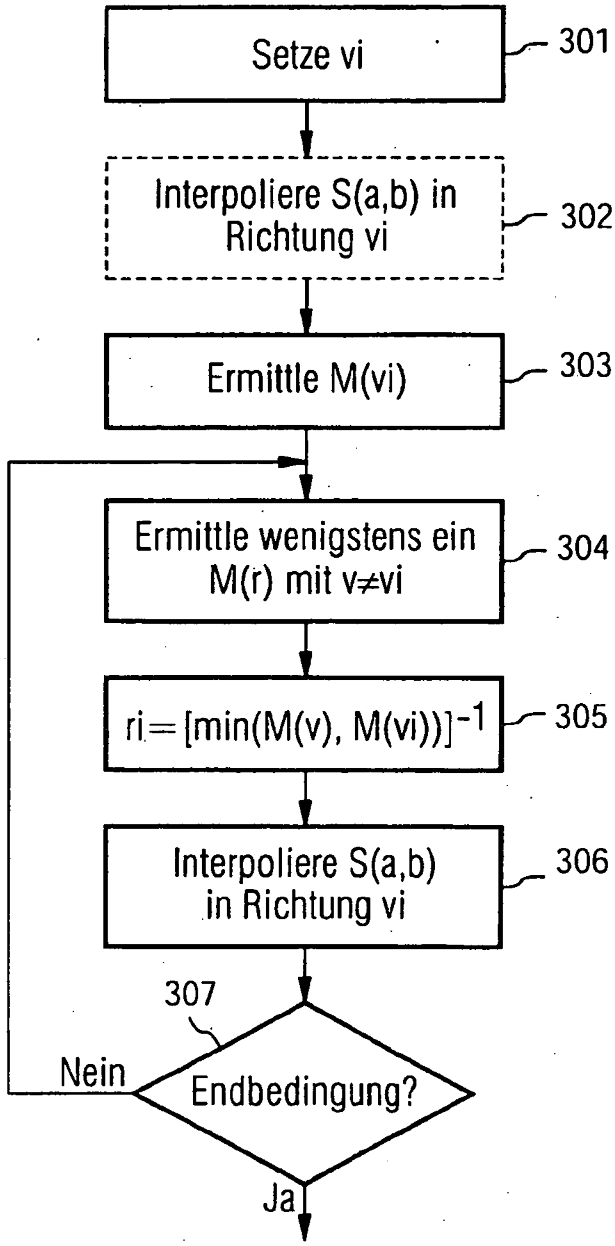
Setze vi
301
Interpoliere S(a,b) in Richtung vi
302
Ermittle M(vi)
303
Ermittle wenigstens ein M(r) mit v≠vi
304
ri = [min(M(v), M(vi))]-1
305
Interpoliere S(a,b) in Richtung vi
306
307
Nein
Endbedingung?
Ja

FIG 14

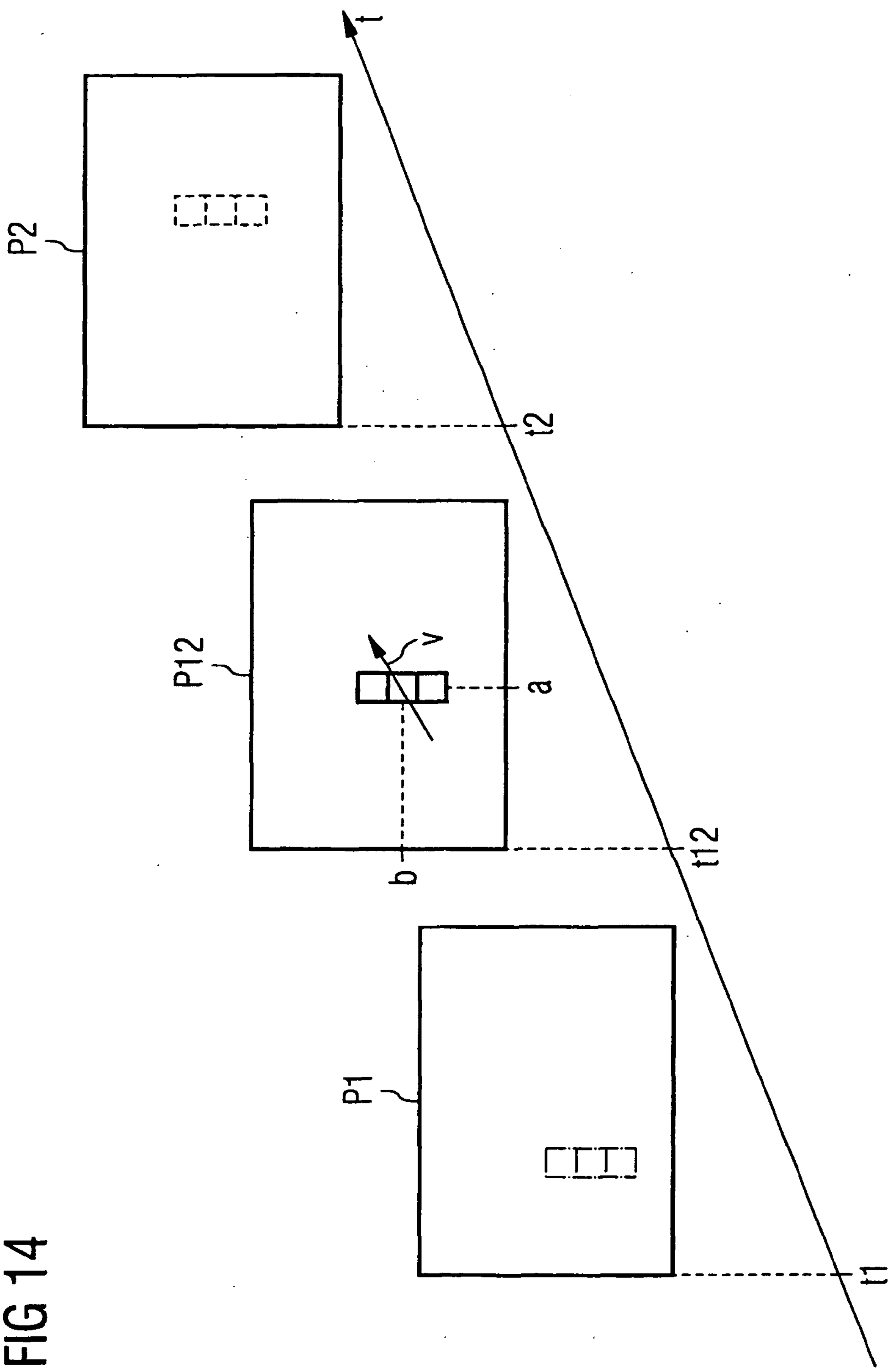

FIG 15

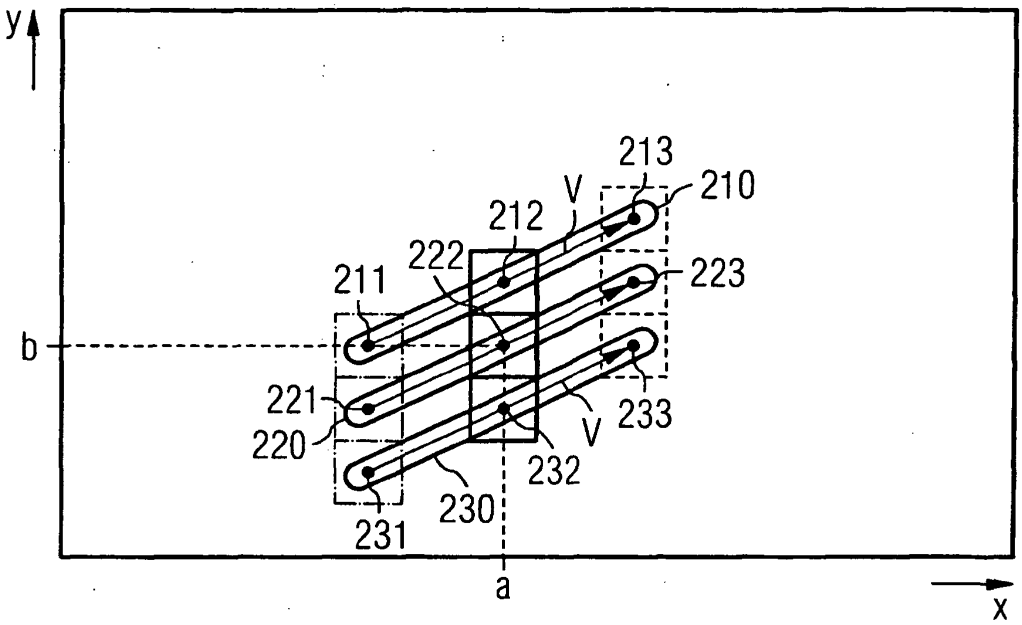


FIG 16

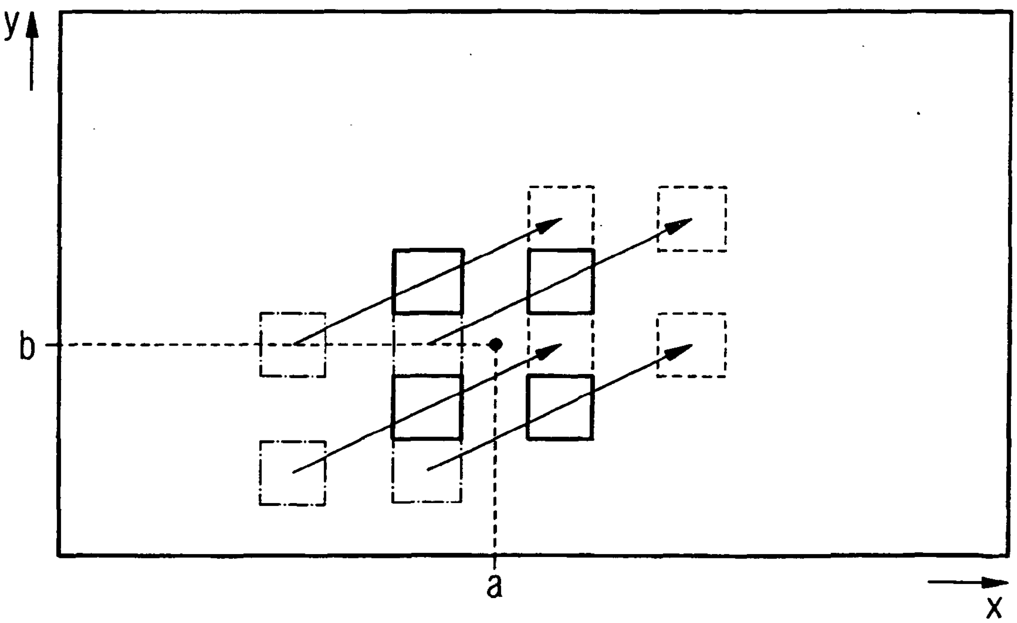

FIG 17

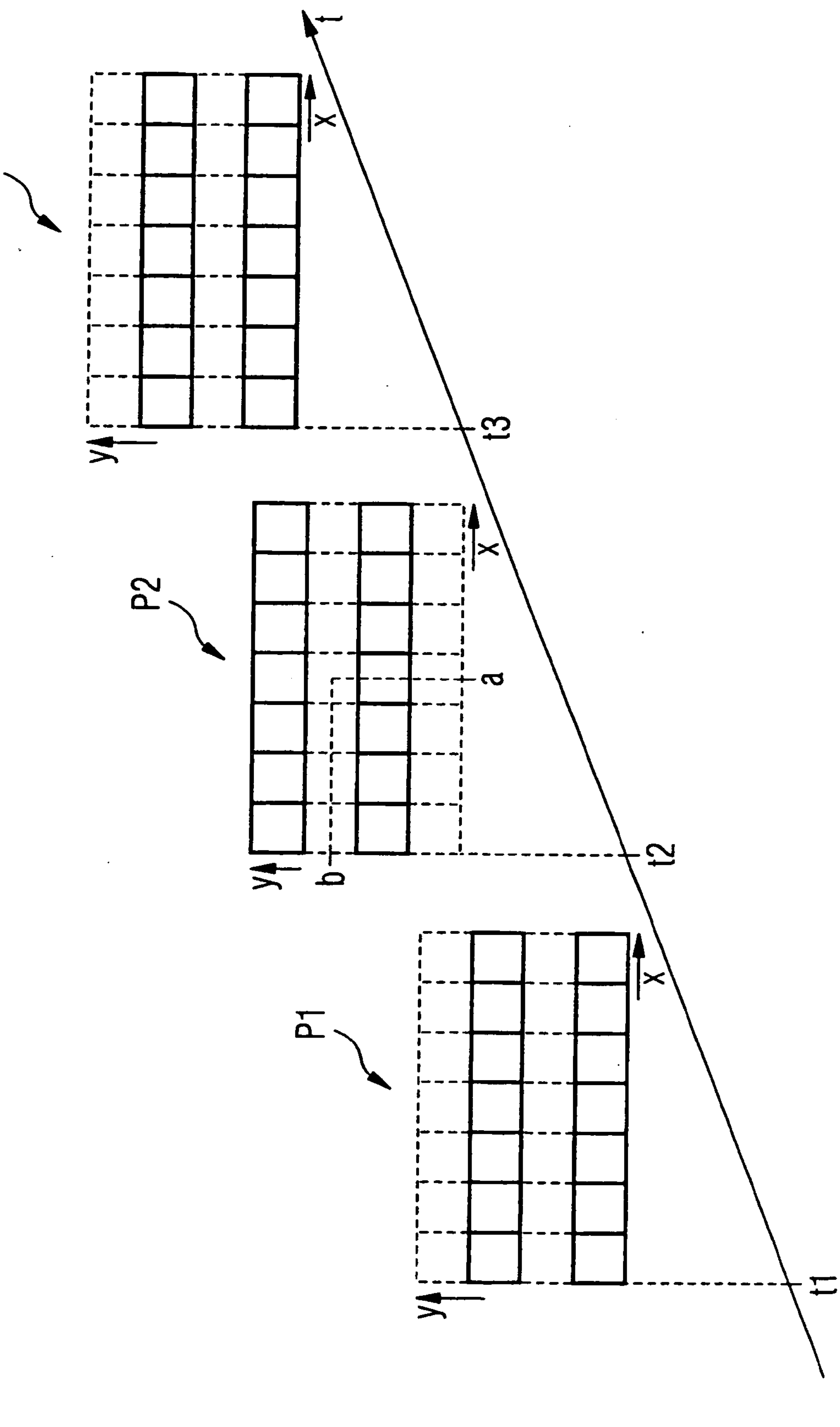

FIG 18

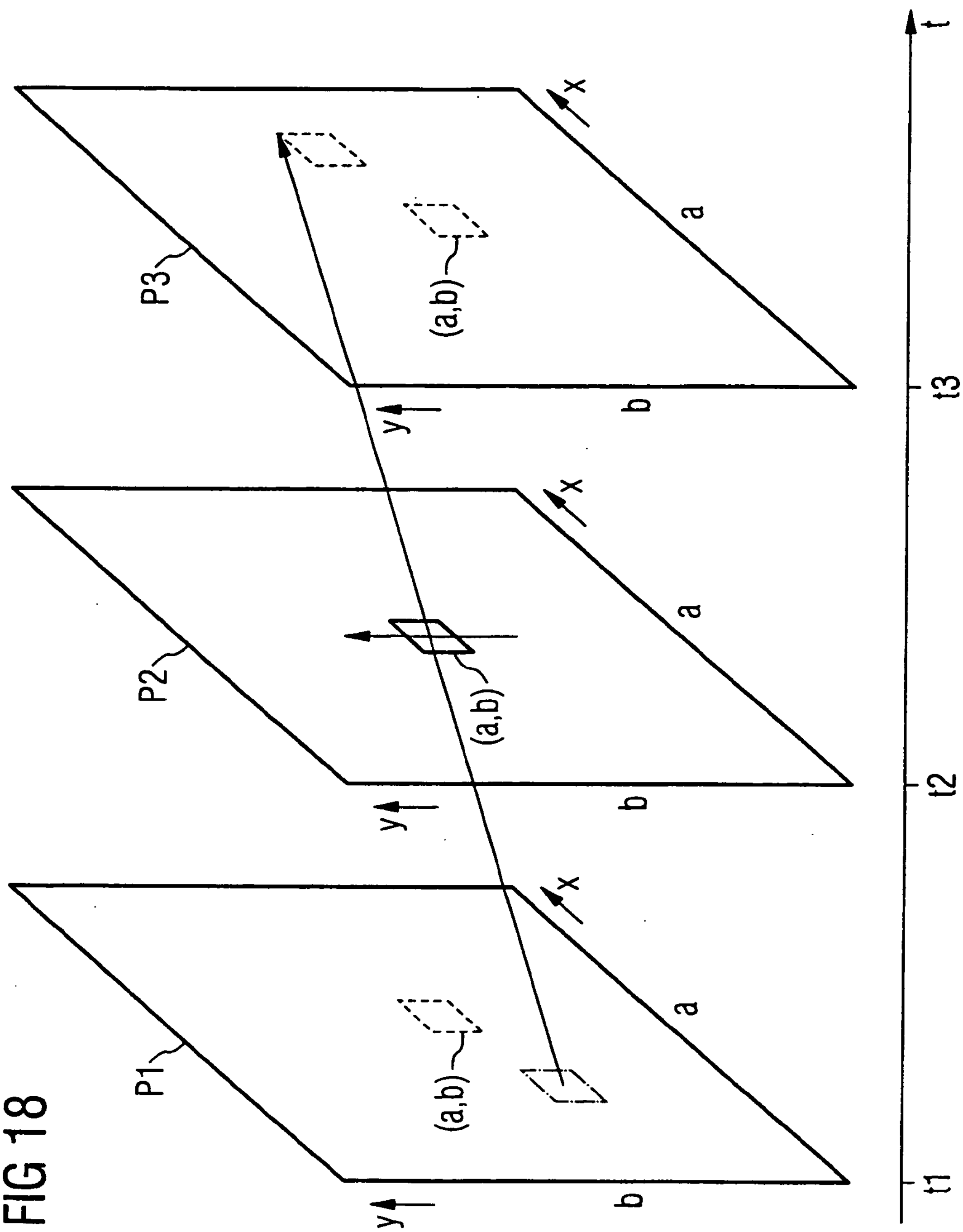

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 2283385 A
- WO 02056589 A1
- DE 10236208 A1
- DE 10232372 A1
- US 6229570 B1
- US 5148269 A, Haan
- EP 0886445 A3


### In der Beschreibung aufgeführte Nicht-Patentliteratur


- **MEISINGER, KAUP.** Örtliche Fehlerverschleierung von gestört empfangenen Bilddaten durch frequenzselektive Extrapolation. *Elektronische Medien: 10. Dortmunder Fernsehseminar, ITG-Fachbericht,* September 2003, vol. 179, 189-194